# EUROPEAN PATENT APPLICATION

(11) **EP 4 793 722 A1**
(43) Date of publication of application: **19.08.2026**
(21) Application number: 25202216.5
(22) Date of filing: 15.09.2025
(51) Int. Cl.: G05B 15/02, G05B 17/02

(54) **MULTI-PLATFORM CONTROL APPLICATION GENERATION ARCHITECTURE WITH GENERATIVE AI SUPPORT**

(30) Priority: 12.02.2025 IN 202541011731; 06.03.2025 US 202519072541
(71) Applicant: Tyco Fire & Security GmbH, 8212 Neuhausen am Rheinfall (CH)
(72) Inventor: RAISONI, Roshan Rajen, Milwaukee , Wisconsin, 53202 (US); ROGUS, Tony, Milwaukee, Wisconsin, 53209 (US); RUGGIERO, Joseph, Lemont, Illinois, 60439 (US); ASMUS, Matthew J., Watertown, Wisconsin, 53098 (US); AMUNDSON, Christopher R., Grafton, Wisconsin, 53024 (US); BRANDT, Daniel J., Hartland, Wisconsin, 53029 (US); SAHA, Suvam, 7000030 West Bengal (IN)
(74) Representative: Meissner Bolte Nürnberg

(57) **Abstract**

A method includes generating, by one or more processors, a control application from a sequence of operations for building equipment, running, by one or more processors, a simulation based on the control application, determining, by one or more processors, an enhancement to the sequence of operations based on the simulation, and controlling, via a building controller, the building equipment in accordance with the enhancement to the sequence of operations. A system includes generating or modifying a plurality of control applications, running a plurality of simulations, determining a plurality of enhancements to the sequence of operations, and outputting an improve building design.

## Description

This application claims the benefit of and priority to Indian Patent Application No. 202541011731 filed February 12, 2025, the entire disclosure of which is incorporated by reference herein.

This application relates generally to a building system of a building or campus, for example a heating, ventilation, and/or air conditioning (HVAC) system, HVAC equipment, central utility plant that serves a building or campus, etc. In some aspects, this application relates more particularly to systems for managing and processing data of the building or the building system. In some aspects, this application relates to enhancing control applications for one or more controllers used in a sequence of operation of a building system (e.g., HVAC system). Enhancing control applications of a building system balances the efficient operations of building equipment (e.g., energy savings, resource savings, emissions reductions), the building system, and the building. In some aspects, this application relates to a system for optimally controlling the building or the building system, such as a central utility plant, based on sequences of operation and control application enhancements.

One implementation of the present disclosure is a method. The method includes generating, by one or more processors, a control application from a sequence of operations for building equipment, running, by one or more processors, a simulation based on the control application, determining, by one or more processors, an enhancement to the sequence of operations based on the simulation, and controlling, via a building controller, the building equipment in accordance with the enhancement to the sequence of operations.

Another implementation of the present disclosure is a system. The system includes a computer system programmed to generate a control application from a sequence of operations for building equipment, run a simulation based on the control application, and determine an enhancement to the sequence of operations based on the simulation; and a building controller configured to control the building equipment in accordance with the enhancement to the sequence of operations.

Another implementation of the present disclosure is a system. The system includes a computer system programmed to generate a first control application from a sequence of operations for building equipment, run a first simulation based on the first control application, determine a first enhancement to the sequence of operations based on the first simulation, modify the first control application to generate a second control application based on the first enhancement to the sequence of operations, run a second simulation based on the second control application, and an improved building design based on one of a plurality of operations, wherein the plurality of operations include the sequence of operations and the first enhancement to the sequence of operations.

In some embodiments, the method further includes comprising extracting tags from the sequence of operations wherein the sequence of operations is free-form text, generating the control application from the sequence of operations for the building equipment comprises generating the control application responsive to a determination based on the tags, generating a model based on a plant drawing and the control application such that the model satisfies the characteristics and includes the building equipment, modifying the control application based on the enhancement to the sequence of operations, installing the modified control application on the building controller, and running a modified simulation based on the modified control application. In some embodiments, a computer system is further programmed to execute the method above.

In some embodiments, generating the control application from the sequence of operations for the building equipment comprises generating the control application responsive to a determination based on the tags, and running the simulation based on the control application is further based on the model. In some embodiments, a computer system is further programmed to execute the methods above.

In some embodiments, the system further includes a computer system further programmed to determine a second enhancement to the sequence of operations based on the first simulation and the second simulation, modify the first control application or the second control application to generate a third control application based on the first enhancement to the sequence of operations or the second enhancement to the sequence of operations, and run a third simulation based on the third control application. The plurality of operations further includes the third sequence of operations. In some embodiments, the computer system is further programmed to install a control application module to the building controller, wherein the control application module includes the first control application or the second control application. Embodiments according to the invention are disclosed in particular in the appended claims.

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a block diagram of an example of a machine learning model-based system for equipment servicing applications.
FIG. 2 is a block diagram of an example of a language model-based system for equipment servicing applications.
FIG. 3 is a block diagram of an example of the system of FIG. 2 including user application session components.
FIG. 4 is a block diagram of an example of the system of FIG. 2 including feedback training components.
FIG. 5 is a block diagram of an example of the system of FIG. 2 including data filters.
FIG. 6 is a block diagram of an example of the system of FIG. 2 including data validation components.
FIG. 7 is a block diagram of an example of the system of FIG. 2 including expert review and intervention components.
FIG. 8 is a flow diagram of a method of generating and using a central utility plant model.
FIG. 9 is another flow diagram of a method of generating and using a central utility plant model.
FIG. 10 is another flow diagram of a method of generating and using a central utility plant model.
FIG. 11 is another flow diagram of a method of generating and using a central utility plant model.
FIG. 12 is a diagram of running simulations using a central utility plant model.
FIG. 13 illustrates a manual approach for creating control applications.
FIG. 14 is a diagram of a system for automatically generating, installing, and using a control application.
FIG. 15 is a diagram of a system for automatically generating a control application module.
FIG. 16 is a flow diagram of a method of automatically generating, installing, and using a control application.
FIG. 17 is a diagram of a system for automatically generating, installing, and using an enhancement of a sequence of operations.
FIG. 18 is a flowchart of a method of generating, installing, and using an enhancement of a sequence of operations.
FIG. 19 is a flowchart of a method of automatically generating, installing, and using an enhancement of a sequence of operations.

Referring generally to the FIGURES, systems and methods in accordance with the present disclosure can implement various systems to precisely generate data relating to operations to be performed for managing building systems and components and/or items of equipment, including heating, ventilation, cooling, and/or refrigeration (HVAC-R) systems and components and/or central utility plants for buildings and/or campuses. For example, various systems described herein can be implemented to more precisely generate data for various applications including, for example and without limitation, generation and installation of control applications for execution on building controllers, generation and execution of simulations of central utility plants, virtual assistance for supporting technicians responding to service requests; generating technical reports corresponding to service requests; facilitating diagnostics and troubleshooting procedures; recommendations of services to be performed; and/or recommendations for products or tools to use or install as part of service operations. Various such applications can facilitate both asynchronous and real-time service operations, including by generating text data for such applications based on data from disparate data sources that may not have predefined database associations amongst the data sources, yet may be relevant at specific steps or points in time during service operations.

Teachings herein relate to automated generation of control applications for installation and execution on building controllers for use in building systems such as HVAC systems, central utility plants, etc. A building or campus for which a building system is to be installed may use numerous controllers to control various equipment for the building (e.g., chillers, boilers, air handling units, variable air volume boxes, rooftop units, cooling towers, heat pump, generators, energy storage equipment, etc.) and process data from various sensors, meters, and other data sources associated with the building and operation of building equipment. Due to different equipment specifications, building designs, sensor availability, occupant preferences, building goals, etc., the various controllers can execute different control applications appropriate for the equipment which it controls in the context of the building or campus. The desired operation of each controller may be specified by building system designers, customers, etc. in free-text documentation referred to as a sequence of operations. However, the sequence of operations cannot be directly executed by a controller, which requires appropriate software code to be installed thereon which causes the controller to operate in accordance with the corresponding sequence of operations. It can be a challenge to provide controllers with appropriate software applications based on unstructured sequence of operations inputs. The teachings herein address such challenges, for example using at least one AI model, providing for automated creation and installation of control applications for building controllers based on unstructured (e.g., free-text, natural language).

Teachings herein relate to creation and use of models of central utility plants. A central utility plant can include a variety of different interconnected building equipment, such as chillers, cooling towers, boilers, cold water storage, hot water storage, electricity generators (e.g., natural gas generators, photovoltaic systems, wind power systems, other energy sources), as well as airside equipment (e.g., air handling units), for example as described in U.S. Application No. 17/826,635 (Pub. No. 2022/0284519) filed May 27, 2022, the entire disclosure of which is incorporated by reference herein. It can be time-consuming and challenging to set up virtual models of central plants and can involve manual creation by an expert user and various computationally expensive processes for testing and validating a manually created model. Technological solutions according to the teachings herein can enable efficient, intelligent model creation from natural language inputs or other unstructured inputs. Furthermore, in some embodiments, the systems and methods herein provide for use of such models in simulations configured using artificial intelligence approaches which provide for appropriate simulations be executed to provide information requested by a user (e.g., as opposed to a larger set of default simulations or simulations requiring manual guessing by a user), leading to additional gains in computational efficiency with respect to use of central plant models in simulation and related use cases.

Some aspects of the present disclosure relate to simulations for facilitating initial plant design and/or plant redesign. Plant design decisions have a far-reaching effect on plant resource consumption, operating costs, etc. A (e.g., cloud-based) plant simulator can create a virtual representation of a central utility plant and simulates plant utility costs over a time period (e.g., for each hour of a year, run "what-if" scenarios, evaluate plant designs and upgrades, and compare predictions with actual performance. Central utility plant simulations can facilitate identification of optimal central plant configurations, provide right-sizing of plant equipment to reduce upfront cost, and inform plant design decisions to reduce lifecycle costs. However, user interfaces for plant simulator tools can be very technical and not easily understood by users (e.g., other than expert, frequent, trained, etc. users). Furthermore, execution of simulations require substantial computational time (e.g., minutes, hours) such that it is computationally expensive to run plant simulator tools under instructions of users who may be making mistakes in configuring models and simulations due to interface complexity, as such simulations may be set up incorrectly and thus provide only unhelpful or misleading results. Accordingly, some aspects of the present disclosure provide for a simple text or audio interface to provide answers from a plant simulator, for example without a user drawing plant diagrams (or by simplifying drawing of plant diagrams), entering detailed technical information, without manually setting up multiple simulations, and while reducing computation time to solutions provide. For instance, the teachings herein provide for tools that can automatically answer questions such as: What are optimal plant configuration, equipment, or setpoints to reduce my water usage by 20%; reduce my operating cost by 20%; reduce initial investment by 20%; have minimal investment for an 30,000 ft² office building in Tampa, Florida; etc.; or What plant configurations allow me to save the maximum amount of water while reducing my electricity cost and initial amount of investment? The teachings herein provide for simple user inputs, faster processing, and simulations providing detailed insights on central utility plants. In some embodiments, such advantages are achieved by deploying generative artificial intelligence models for generating plant models and/or for configuring simulations from unstructured user input.

In some systems, service operations can be supported by text information, such as predefined text documents such as service, diagnostic, and/or troubleshooting guides. Various such text information may not be useful for specific service requests and/or technicians performing the service. For example, the text information may correspond to different items of equipment or versions of items of equipment to be serviced. The text information, being predefined, may not account for specific technical issues that may be present in the items of equipment to be serviced.

AI and/or machine learning (ML) systems, including but not limited to LLMs, can be used to generate text data and data of other modalities in a more responsive manner to real-time conditions, including generating strings of text data that may not be provided in the same manner in existing documents, yet may still meet criteria for useful text information, such as relevance, style, and coherence. For example, LLMs can predict text data based at least on inputted prompts and by being configured (e.g., trained, modified, updated, fine-tuned) according to training data representative of the text data to predict or otherwise generate.

However, various considerations may limit the ability of such systems to precisely generate appropriate data for specific conditions. For example, due to the predictive nature of the generated data, some LLMs may generate text data that is incorrect, imprecise, or not relevant to the specific conditions. Using the LLMs may require a user to manually vary the content and/or syntax of inputs provided to the LLMs (e.g., vary inputted prompts) until the output of the LLMs meets various objective or subjective criteria of the user. The LLMs can have token limits for sizes of inputted text during training and/or runtime/inference operations (and relaxing or increasing such limits may require increased computational processing, API calls to LLM services, and/or memory usage), limiting the ability of the LLMs to be effectively configured or operated using large amounts of raw data or otherwise unstructured data.

Systems and methods in accordance with the present disclosure can use machine learning models, including LLMs and other generative AI systems, to capture data, including but not limited to unstructured knowledge from various data sources, and process the data to accurately generate outputs, such as completions responsive to prompts, including in structured data formats for various applications and use cases. The system can implement various automated and/or expert-based thresholds and data quality management processes to improve the accuracy and quality of generated outputs and update training of the machine learning models accordingly. The system can enable real-time messaging and/or conversational interfaces for users to provide field data regarding equipment to the system (including presenting targeted queries to users that are expected to elicit relevant responses for efficiently receiving useful response information from users) and guide users, such as service technicians, through relevant service, diagnostic, troubleshooting, and/or repair processes.

This can include, for example, receiving data from technician service reports in various formats, including various modalities and/or multi-modal formats (e.g., text, speech, audio, image, and/or video). The system can facilitate automated, flexible customer report generation, such as by processing information received from service technicians and other users into a standardized format, which can reduce the constraints on how the user submits data while improving resulting reports. The system can couple unstructured service data to other input/output data sources and analytics, such as to relate unstructured data with outputs of timeseries data from equipment (e.g., sensor data; report logs) and/or outputs from models or algorithms of equipment operation, which can facilitate more accurate analytics, prediction services, diagnostics, and/or fault detection. The system can perform classification or other pattern recognition or trend detection operations to facilitate more timely assignment of technicians, scheduling of technicians based on expected times for jobs, and provisioning of trucks, tools, and/or parts. The system can perform root cause prediction by being trained using data that includes indications of root causes of faults or errors, where the indications are labels for or otherwise associated with (unstructured or structure) data such as service requests, service reports, service calls, etc. The system can receive, from a service technician in the field evaluating the issue with the equipment, feedback regarding the accuracy of the root cause predictions, as well as feedback regarding how the service technician evaluated information about the equipment (e.g., what data did they evaluate; what did they inspect; did the root cause prediction or instructions for finding the root cause accurately match the type of equipment, etc.), which can be used to update the root cause prediction model.

For example, the system can provide a platform for fault detection and servicing processes in which a machine learning model is configured based on connecting or relating unstructured data and/or semantic data, such as human feedback and written/spoken reports, with time-series product data regarding items of equipment, so that the machine learning model can more accurately detect causes of alarms or other events that may trigger service responses. For instance, responsive to an alarm for a chiller, the system can more accurately detect a cause of the alarm, and generate a prescription (e.g., for a service technician) for responding to the alarm; the system can request feedback from the service technician regarding the prescription, such as whether the prescription correctly identified the cause of the alarm and/or actions to perform to respond to the cause, as well as the information that the service technician used to evaluate the correctness or accuracy of the prescription; the system can use this feedback to modify the machine learning models, which can increase the accuracy of the machine learning models.

In some embodiments, the system can generate a model of a central utility plant (or other building system) based on one or more natural language inputs (e.g., speech, text, etc.) from a user, for example in which a user describes the equipment of the central utility plant and connections between said equipment in a natural language or other unstructured format as an input to the system. The system can also or alternatively use a blueprint of the plant design as an input. The system can use at least one machine learning model according to the teachings herein to output a model of the central utility plant suitable for use in running simulations of plant operations, for use in online control (e.g., model predictive control, predictive optimization processes, etc.), or for other use cases.

In some instances, significant computational resources (or human user resources) can be required to process data relating to equipment operation, such as time-series product data and/or sensor data, to detect or predict faults and/or causes of faults. In addition, it can be resource-intensive to label such data with identifiers of faults or causes of faults, which can make it difficult to generate machine learning training data from such data. Systems and methods in accordance with the present disclosure can leverage the efficiency of language models (e.g., GPT-based models or other pre-trained LLMs) in extracting semantic information (e.g., semantic information identifying faults, causes of faults, and other accurate expert knowledge regarding equipment servicing) from the unstructured data in order to use both the unstructured data and the data relating to equipment operation to generate more accurate outputs regarding equipment servicing. As such, by implementing language models using various operations and processes described herein, building management and equipment servicing systems can take advantage of the causal/semantic associations between the unstructured data and the data relating to equipment operation, and the language models can allow these systems to more efficiently extract these relationships in order to more accurately predict targeted, useful information for servicing applications at inference-time/runtime. While various implementations are described as being implemented using generative AI models such as transformers and/or GANs, in some embodiments, various features described herein can be implemented using non-generative AI models or even without using AI/machine learning, and all such modifications fall within the scope of the present disclosure.

The system can enable a generative AI-based service wizard interface. For example, the interface can include user interface and/or user experience features configured to provide a question/answer-based input/output format, such as a conversational interface, that directs users through providing targeted information for accurately generating predictions of root cause, presenting solutions, or presenting instructions for repairing or inspecting the equipment to identify information that the system can use to detect root causes or other issues. The system can use the interface to present information regarding parts and/or tools to service the equipment, as well as instructions for how to use the parts and/or tools to service the equipment.

In various implementations, the systems can include a plurality of machine learning models that may be configured using integrated or disparate data sources. This can facilitate more integrated user experiences or more specialized (and/or lower computational usage for) data processing and output generation. Outputs from one or more first systems, such as one or more first algorithms or machine learning models, can be provided at least as part of inputs to one or more second systems, such as one or more second algorithms or machine learning models. For example, a first language model can be configured to process unstructured inputs (e.g., text, speech, images, etc.) into a structure output format compatible for use by a second system, such as a root cause prediction algorithm or equipment configuration model.

The system can be used to automate interventions for equipment operation, servicing, fault detection and diagnostics (FDD), and alerting operations. For example, by being configured to perform operations such as root cause prediction, the system can monitor data regarding equipment to predict events associated with faults and trigger responses such as alerts, service scheduling, and initiating FDD or modifications to configuration of the equipment. The system can present to a technician or manager of the equipment a report regarding the intervention (e.g., action taken responsive to predicting a fault or root cause condition) and requesting feedback regarding the accuracy of the intervention, which can be used to update the machine learning models to more accurately generate interventions.

### I. MACHINE LEARNING MODELS FOR BUILDING MANAGEMENT AND EQUIPMENT SERVICING

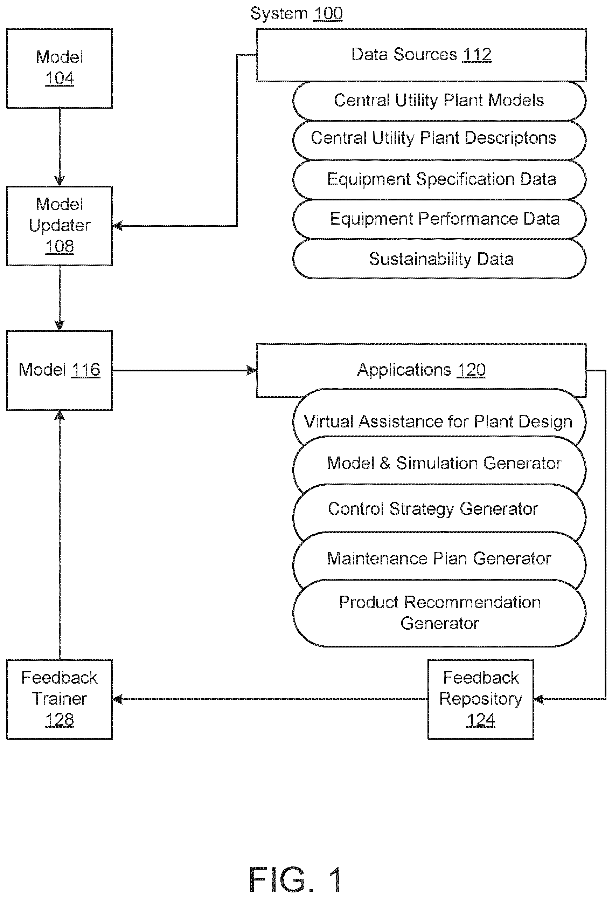

FIG. 1 depicts an example of a system 100. The system 100 can implement various operations for configuring (e.g., training, updating, modifying, transfer learning, fine-tuning, etc.) and/or operating various AI and/or ML systems, such as neural networks of LLMs or other generative AI systems. The system 100 can be used to implement various generative AI-based building equipment servicing operations.

For example, the system 100 can be implemented for operations associated with any of a variety of building management systems (BMSs) or equipment or components thereof. A BMS can include a system of devices that can control, monitor, and manage equipment in or around a building or building area. The BMS can include, for example, a HVAC system, a central utility plant system, a security system, a lighting system, a fire alerting system, any other system that is capable of managing building functions or devices, or any combination thereof. The BMS can include or be coupled with items of equipment, for example and without limitation, such as heaters, chillers, boilers, air handling units, sensors, actuators, refrigeration systems, fans, blowers, heat exchangers, energy storage devices, condensers, valves, or various combinations thereof, for example various equipment and devices of a central utility plant.

The items of equipment can operate in accordance with various qualitative and quantitative parameters, variables, setpoints, and/or thresholds or other criteria, for example. In some instances, the system 100 and/or the items of equipment can include or be coupled with one or more controllers for controlling parameters of the items of equipment, such as to receive control commands for controlling operation of the items of equipment via one or more wired, wireless, and/or user interfaces of controller.

Various components of the system 100 or portions thereof can be implemented by one or more processors coupled with or more memory devices (memory). The processors can be a general purpose or specific purpose processors, an application specific integrated circuit (ASIC), one or more field programmable gate arrays (FPGAs), a group of processing components, or other suitable processing components. The processors may be configured to execute computer code and/or instructions stored in the memories or received from other computer readable media (e.g., CDROM, network storage, a remote server, etc.). The processors can be configured in various computer architectures, such as graphics processing units (GPUs), distributed computing architectures, cloud server architectures, client-server architectures, or various combinations thereof. One or more first processors can be implemented by a first device, such as an edge device, and one or more second processors can be implemented by a second device, such as a server or other device that is communicatively coupled with the first device and may have greater processor and/or memory resources.

The memories can include one or more devices (e.g., memory units, memory devices, storage devices, etc.) for storing data and/or computer code for completing and/or facilitating the various processes described in the present disclosure. The memories can include random access memory (RAM), read-only memory (ROM), hard drive storage, temporary storage, non-volatile memory, flash memory, optical memory, or any other suitable memory for storing software objects and/or computer instructions. The memories can include database components, object code components, script components, or any other type of information structure for supporting the various activities and information structures described in the present disclosure. The memories can be communicably connected to the processors and can include computer code for executing (e.g., by the processors) one or more processes described herein.

### Machine Learning Models

The system 100 can include or be coupled with one or more first models 104. The first model 104 can include one or more neural networks, including neural networks configured as generative models. For example, the first model 104 can predict or generate new data (e.g., artificial data; synthetic data; data not explicitly represented in data used for configuring the first model 104). The first model 104 can generate any of a variety of modalities of data, such as text, speech, audio, images, and/or video data. The neural network can include a plurality of nodes, which may be arranged in layers for providing outputs of one or more nodes of one layer as inputs to one or more nodes of another layer. The neural network can include one or more input layers, one or more hidden layers, and one or more output layers. Each node can include or be associated with parameters such as weights, biases, and/or thresholds, representing how the node can perform computations to process inputs to generate outputs. The parameters of the nodes can be configured by various learning or training operations, such as unsupervised learning, weakly supervised learning, semi-supervised learning, or supervised learning.

The first model 104 can include, for example and without limitation, one or more language models, LLMs, attention-based neural networks, transformer-based neural networks, generative pretrained transformer (GPT) models, bidirectional encoder representations from transformers (BERT) models, encoder/decoder models, sequence to sequence models, autoencoder models, generative adversarial networks (GANs), convolutional neural networks (CNNs), recurrent neural networks (RNNs), diffusion models (e.g., denoising diffusion probabilistic models (DDPMs)), or various combinations thereof.

For example, the first model 104 can include at least one GPT model. The GPT model can receive an input sequence and can parse the input sequence to determine a sequence of tokens (e.g., words or other semantic units of the input sequence, such as by using Byte Pair Encoding tokenization). The GPT model can include or be coupled with a vocabulary of tokens, which can be represented as a one-hot encoding vector, where each token of the vocabulary has a corresponding index in the encoding vector; as such, the GPT model can convert the input sequence into a modified input sequence, such as by applying an embedding matrix to the token tokens of the input sequence (e.g., using a neural network embedding function), and/or applying positional encoding (e.g., sin-cosine positional encoding) to the tokens of the input sequence. The GPT model can process the modified input sequence to determine a next token in the sequence (e.g., to append to the end of the sequence), such as by determining probability scores indicating the likelihood of one or more candidate tokens being the next token, and selecting the next token according to the probability scores (e.g., selecting the candidate token having the highest probability scores as the next token). For example, the GPT model can apply various attention and/or transformer-based operations or networks to the modified input sequence to identify relationships between tokens for detecting the next token to form the output sequence.

The first model 104 can include at least one diffusion model, which can be used to generate image and/or video data. For example, the diffusional model can include a denoising neural network and/or a denoising diffusion probabilistic model neural network. The denoising neural network can be configured by applying noise to one or more training data elements (e.g., images, video frames) to generate noised data, providing the noised data as input to a candidate denoising neural network, causing the candidate denoising neural network to modify the noised data according to a denoising schedule, evaluating a convergence condition based on comparing the modified noised data with the training data instances, and modifying the candidate denoising neural network according to the convergence condition (e.g., modifying weights and/or biases of one or more layers of the neural network). In some implementations, the first model 104 includes a plurality of generative models, such as GPT and diffusion models, that can be trained separately or jointly to facilitate generating multi-modal outputs, such as technical documents (e.g., service guides) that include both text and image/video information.

In some implementations, the first model 104 can be configured using various unsupervised and/or supervised training operations. The first model 104 can be configured using training data from various domain-agnostic and/or domain-specific data sources, including but not limited to various forms of text, speech, audio, image, and/or video data, or various combinations thereof. The training data can include a plurality of training data elements (e.g., training data instances). Each training data element can be arranged in structured or unstructured formats; for example, the training data element can include an example output mapped to an example input, such as a query representing a service request or one or more portions of a service request, and a response representing data provided responsive to the query. The training data can include data that is not separated into input and output subsets (e.g., for configuring the first model 104 to perform clustering, classification, or other unsupervised ML operations). The training data can include human-labeled information, including but not limited to feedback regarding outputs of the models 104, 116. This can allow the system 100 to generate more human-like outputs.

In some implementations, the training data includes data relating to building management systems. For example, the training data can include examples of HVAC-R data, such as operating manuals, technical data sheets, configuration settings, operating setpoints, diagnostic guides, troubleshooting guides, user reports, technician reports. In some implementations, the training data used to configure the first model 104 includes at least some publicly accessible data, such as data retrievable via the Internet.

Referring further to FIG. 1, the system 100 can configure the first model 104 to determine one or more second models 116. For example, the system 100 can include a model updater 108 that configures (e.g., trains, updates, modifies, fine-tunes, etc.) the first model 104 to determine the one or more second models 116. In some implementations, the second model 116 can be used to provide application-specific outputs, such as outputs having greater precision, accuracy, or other metrics, relative to the first model, for targeted applications.

The second model 116 can be similar to the first model 104. For example, the second model 116 can have a similar or identical backbone or neural network architecture as the first model 104. In some implementations, the first model 104 and the second model 116 each include generative AI machine learning models, such as LLMs (e.g., GPT-based LLMs) and/or diffusion models. The second model 116 can be configured using processes analogous to those described for configuring the first model 104.

In some implementations, the model updater 108 can perform operations on at least one of the first model 104 or the second model 116 via one or more interfaces, such as application programming interfaces (APIs). For example, the models 104, 116 can be operated and maintained by one or more systems separate from the system 100. The model updater 108 can provide training data to the first model 104, via the API, to determine the second model 116 based on the first model 104 and the training data. The model updater 108 can control various training parameters or hyperparameters (e.g., learning rates, etc.) by providing instructions via the API to manage configuring the second model 116 using the first model 104.

### Data Sources

The model updater 108 can determine the second model 116 using data from one or more data sources 112. For example, the system 100 can determine the second model 116 by modifying the first model 104 using data from the one or more data sources 112. The data sources 112 can include or be coupled with any of a variety of integrated or disparate databases, data warehouses, digital twin data structures (e.g., digital twins of items of equipment or building management systems or portions thereof), data lakes, data repositories, documentation records, or various combinations thereof. In some implementations, the data sources 112 include HVAC-R data in any of text, speech, audio, image, or video data, or various combinations thereof, such as data associated with HVAC-R components and procedures including but not limited to installation, operation, configuration, repair, servicing, diagnostics, and/or troubleshooting of HVAC-R components and systems. Various data described below with reference to data sources 112 may be provided in the same or different data elements and may be updated at various points. The data sources 112 can include or be coupled with items of equipment (e.g., where the items of equipment output data for the data sources 112, such as sensor data, etc.). The data sources 112 can include various online and/or social media sources, such as blog posts or data submitted to applications maintained by entities that manage the buildings. The system 100 can determine relations between data from different sources, such as by using timeseries information and identifiers of the sites or buildings at which items of equipment are present to detect relationships between various different data relating to the items of equipment (e.g., to train the models 104, 116 using both timeseries data (e.g., sensor data; outputs of algorithms or models, etc.) regarding a given item of equipment and freeform natural language reports regarding the given item of equipment).

The data sources 112 can include unstructured data or structured data (e.g., data that is labeled with or assigned to one or more predetermined fields or identifiers). For example, using the first model 104 and/or second model 116 to process the data can allow the system 100 to extract useful information from data in a variety of formats, including unstructured/freeform formats, which can allow service technicians to input information in less burdensome formats. The data can be of any of a plurality of formats (e.g., text, speech, audio, image, video, etc.), including multi-modal formats. For example, the data may be received from service technicians in forms such as text (e.g., laptop/desktop or mobile application text entry), audio, and/or video (e.g., dictating findings while capturing video).

The data sources 112 can include central utility plant models or models of other equipment. The central utility plant models or other equipment models can include models of central utility plants, including actual (real, built, etc.) central utility plants and designed (e.g., simulated, planned, etc.) central utility plants, or other equipment or other systems of equipment. The central utility plant models can include representations of equipment, connections between the equipment, spatial arrangements of the equipment, and other information relating to the central utility plants. In some embodiments, each central utility plant model indicates the equipment included (e.g., by model number, equipment type, equipment capacity, etc.) the inputs to each unit of equipment, the outputs of each unit of equipment, connections between the equipment (e.g., an indication that the output of one unit of equipment is an input to another unit of equipment), sources of resources (e.g., utility providers, environmental sources such as solar energy or geothermal power source), and buildings, facilities, etc. that receive resources, heating, cooling, etc. provided by the central utility plant. Central utility plant models can be configured as described in U.S. Application No. 17/826,635 (Pub. No. 2022/0284519) filed May 27, 2022, the entire disclosure of which is incorporated by reference herein. Equipment models included in the data sources 112 can include models of air handling units, rooftop units, variable air volume boxes, fan coils, heat pumps, etc. in various embodiments.

The data sources 112 can include central utility plant descriptions, for example freeform, natural language, textual, audio, or other user input describing characteristics of central utility plants. In some embodiments, the central utility plant descriptions correspond to central utility plant models also included in the data sources. In some embodiments, the central utility plant descriptions are collected by prompting humans to describe characteristics of different central utility plants, for example so that the central utility plant descriptions included multiple descriptions of the same central utility plant provided by different humans.

The data sources 112 can include equipment specification data, for example relating to the inputs used by different types of equipment (e.g., water, electricity, natural gas, steam, etc.), the outputs of the different types of equipment (e.g., hot water, cold water, hot air, cooled air, electricity, steam, etc.), the size and/or shape of the equipment (e.g., dimensions, etc.), the capacity of equipment (e.g., maximum load production, maximum operating power, etc.), and other information relating to the physical and functional specifications of the equipment. The equipment specification data can include product literature, specification sheets, pricing information, etc. for various equipment. The equipment specification data can include data objects created for central utility plant modelling, for example data objects included in the central utility plant models included in the data sources 112.

In some embodiments, the equipment specification data includes control applications (computer code, object code, source code, etc.) executed by controllers for various equipment, for example paired with specification of the operations provided by such code, keywords associated with such operations, or other information relating to control applications executed by building controllers. The equipment specification data can include piping and instrumentation diagrams, piping diagrams, equipment schedules, H-diagrams, and other mechanical, electrical, and plumbing documentation.

The data sources 112 can include equipment performance data, for example data relating to the consumption and production of various equipment. The equipment performance data can include efficiency curves and other subplant models, for example subplant curves and subplant models as discussed in U.S. Patent Publication No. 2021/0132586, U.S. Patent Publication No. 2022/0397882, U.S. Application No 17/686,990 filed March 4, 2022, the entire disclosures of which are incorporated by reference herein, and/or the various data described therein for generating such subplant curves and subplant models. The equipment performance data can provide information relating to the resource consumption of various equipment, the production of the various equipment, etc., for example under different demands, settings, control logic, environmental conditions, etc. The equipment performance data can include run-time data collected for particular units of equipment during real operations, aggregated (e.g., average) performance data determined for a type of equipment (e.g., a particular model of chiller) from data collected for multiple units of equipment, and/or design or expected data given by equipment design/engineering documentation. In some embodiments, the equipment performance data includes maintenance data (e.g., warranty data, work order data, replacement parts data) for various equipment, for example indicative of the average of amount of maintenance required for different types of equipment.

The data sources 112 can include sustainability data, for example relating to energy consumption, water consumption, or other resource consumption; carbon emissions, pollutant emissions, etc.; or green energy generation (e.g., solar generation, wind power generation, geothermal power generation). Sustainability data can include historical values of resource consumption, emissions, generation, etc. associated with different central plants (e.g., operational central plants for which central utility plant models and measured/metered data is available, validated simulations) and/or particular equipment (e.g., particular units, categories of equipment, types of equipment, etc.). Sustainability data can include data from resource providers (e.g., utility providers, electricity grid operators), for example data indicating the marginal operating emissions rates associated with grid electricity available at different locations and/or other metric or data relating to the availability of renewable energy resources.

All such data can be used by the model updater 108 to update (e.g., fine-tune and/or augment) the model 104 to provide the model 116.

### Model Configuration

Referring further to FIG. 1, the model updater 108 can perform various machine learning model configuration/training operations to determine the second models 116 using the data from the data sources 112. For example, the model updater 108 can perform various updating, optimization, retraining, reconfiguration, fine-tuning, or transfer learning operations, or various combinations thereof, to determine the second models 116. The model updater 108 can configure the second models 116, using the data sources 112, to generate outputs (e.g., completions) in response to receiving inputs (e.g., prompts), where the inputs and outputs can be analogous to data of the data sources 112.

For example, the model updater 108 can identify one or more parameters (e.g., weights and/or biases) of one or more layers of the first model 104, and maintain (e.g., freeze, maintain as the identified values while updating) the values of the one or more parameters of the one or more layers. In some implementations, the model updater 108 can modify the one or more layers, such as to add, remove, or change an output layer of the one or more layers, or to not maintain the values of the one or more parameters. The model updater 108 can select at least a subset of the identified one or parameters to maintain according to various criteria, such as user input or other instructions indicative of an extent to which the first model 104 is to be modified to determine the second model 116. In some implementations, the model updater 108 can modify the first model 104 so that an output layer of the first model 104 corresponds to output to be determined for applications 120.

Responsive to selecting the one or more parameters to maintain, the model updater 108 can apply, as input to the second model 116 (e.g., to a candidate second model 116, such as the modified first model 104, such as the first model 104 having the identified parameters maintained as the identified values), training data from the data sources 112. For example, the model updater 108 can apply the training data as input to the second model 116 to cause the second model 116 to generate one or more candidate outputs.

The model updater 108 can evaluate a convergence condition to modify the candidate second model 116 based at least on the one or more candidate outputs and the training data applied as input to the candidate second model 116. For example, the model updater 108 can evaluate an objective function of the convergence condition, such as a loss function (e.g., L1 loss, L2 loss, root mean square error, cross-entropy or log loss, etc.) based on the one or more candidate outputs and the training data; this evaluation can indicate how closely the candidate outputs generated by the candidate second model 116 correspond to the ground truth represented by the training data. The model updater 108 can use any of a variety of optimization algorithms (e.g., gradient descent, stochastic descent, Adam optimization, etc.) to modify one or more parameters (e.g., weights or biases of the layer(s) of the candidate second model 116 that are not frozen) of the candidate second model 116 according to the evaluation of the objective function. In some implementations, the model updater 108 can use various hyperparameters to evaluate the convergence condition and/or perform the configuration of the candidate second model 116 to determine the second model 116, including but not limited to hyperparameters such as learning rates, numbers of iterations or epochs of training, etc.

As described further herein with respect to applications 120, in some implementations, the model updater 108 can select the training data from the data of the data sources 112 to apply as the input based at least on a particular application of the plurality of applications 120 for which the second model 116 is to be used for. For example, the model updater 108 can select data from the equipment specification data for the product recommendation generator application 120 or select various combinations of data from the data sources 112 (e.g., central utility plant models, central utility plant descriptions, equipment specification data) for the model and simulation generator application 120. The model updater 108 can apply various combinations of data from various data sources 112 to facilitate configuring the second model 116 for one or more applications 120.

In some implementations, the system 100 can perform at least one of conditioning, classifier-based guidance, or classifier-free guidance to configure the second model 116 using the data from the data sources 112. For example, the system 100 can use classifiers associated with the data, such as identifiers of equipment, types of units of equipment, a characteristics of central plant models and/or characteristics identified in central utility plant descriptions, etc. to condition the training of the second model 116. For example, the system 100 can combine (e.g., concatenate) various such classifiers with the data for inputting to the second model 116 during training, for at least a subset of the data used to configure the second model 116, which can enable the second model 116 to be responsive to analogous information for runtime/inference time operations.

### Applications

Referring further to FIG. 1, the system 100 can use outputs of the one or more second models 116 to implement one or more applications 120. For example, the second models 116, having been configured using data from the data sources 112, can be capable of precisely generating outputs that represent useful, timely, and/or real-time information for the applications 120. In some implementations, each application 120 is coupled with a corresponding second model 116 that is specifically configured to generate outputs for use by the application 120. Various applications 120 can be coupled with one another, such as to provide outputs from a first application 120 as inputs or portions of inputs to a second application 120.

The applications 120 can include any of a variety of desktop, web-based/browser-based, or mobile applications. For example, the applications 120 can be implemented by enterprise management software systems, employees, or other user applications (e.g., applications that relate to BMS functionality such as temperature control, user preferences, conference room scheduling, etc.), equipment portals that provide data regarding items of equipment, or various combinations thereof. The applications 120 can include user interfaces, wizards, checklists, conversational interfaces, chatbots, configuration tools, or various combinations thereof. The applications 120 can receive an input, such as a prompt (e.g., from a user), provide the prompt to the second model 116 to cause the second model 116 to generate an output, such as a completion in response to the prompt, and present an indication of the output. The applications 120 can receive inputs and/or present outputs in any of a variety of presentation modalities, such as text, speech, audio, image, and/or video modalities. For example, the applications 120 can receive unstructured or freeform inputs from a user, such as a service technician, architect, buildings or plant engineer, project manager, other personnel, etc., and generate reports in a standardized format, such as a customer-specific format. This can allow, for example, personnel to automatically, and flexibly, generate customer-ready reports including information relating to central plant model and simulation results; to provide inputs as dictations in order to generate central plant models and/or simulation reports; to provide inputs in any form or a variety of forms, and use the second model 116 (which can be trained to cross-reference metadata in different portions of inputs and relate together data elements) to generate output reports (e.g., the second model 116, having been configured with data that includes time information, can use timestamps of input from dictation and timestamps of when an image is taken, and place the image in the report in a target position or label based on time correlation).

In some implementations, the applications 120 include at least one virtual assistant (e.g., virtual assistance for plant design) application 120. The virtual assistant application can provide various services to support plant design operations, such as presenting information relating to central utility plant models, receiving queries regarding central utility plant models to generate and/or simulations to perform using central utility plant models, and presenting responses indicating central utility plant models and/or simulation results. The virtual assistant application can receive information regarding an item of equipment to be serviced, such as sensor data, text descriptions, or camera images, and process the received information using the second model 116 to generate corresponding responses.

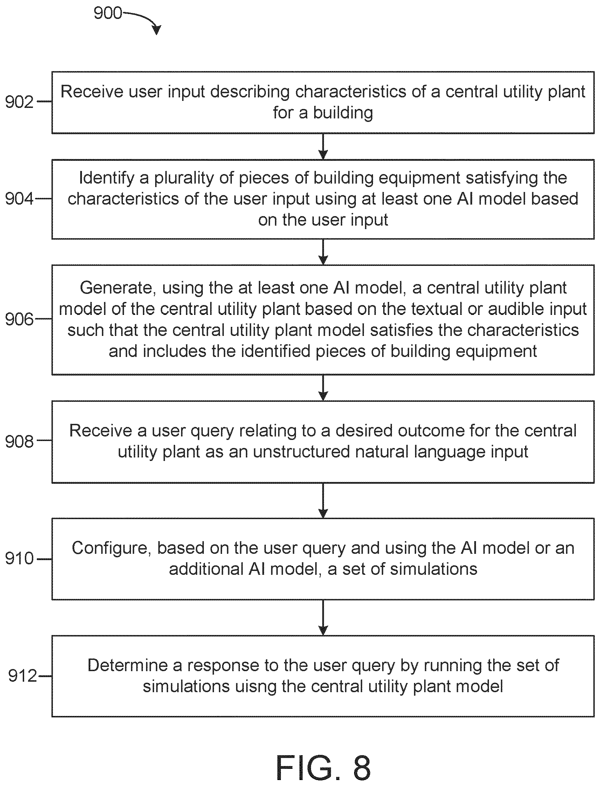

For example, the virtual assistant application 120 can be implemented in a UI/UX wizard configuration, such as to provide a sequence of requests for information from the user (the sequence may include requests that are at least one of predetermined or dynamically generated responsive to inputs from the user for previous requests). For example, the virtual assistant application 120 can provide one or more requests for users such as plant designers, facility managers, or other occupants, and provide the received responses to at least one of the second model 116 or other simulation engine (e.g., as in references incorporated by reference herein above and/or discussed with reference to FIG. 8) to determine a central plant model and/or recommendation for adjusted operation, new equipment to install for a central utility plant, or information supporting other design or operational decisions for a central utility plant. The virtual assistant application 120 can use requests for information such as for unstructured text by which the user describes characteristics of a central plant; answers follow-up questions from the application 120 relating to further details of the central plant; and/or provides image and/or video input (e.g., images of problems, equipment, spaces, plants, etc.). For example, responsive to receiving a response via the virtual assistant application 120 indicating that a user is interested in chillers of a central plant, the system 100 can request, via the virtual assistant application 120, information regarding chillers and connected equipment associated of the central plant, such as pictures of the chillers and central plant, detailed equipment type (e.g., model number, serial number, name, etc.) information, or various combinations thereof.

The virtual assistant application 120 can include a plurality of applications 120 (e.g., variations of interfaces or customizations of interfaces) for a plurality of respective user types. For example, the virtual assistant application 120 can include a first application 120 for a customer user, and a second application 120 for a central plant engineer user. The virtual assistant applications 120 can allow for updating and other communications between the first and second applications 120 as well as the second model 116. Using one or more of the first application 120 and the second application 120, the system 100 can manage continuous/real-time conversations for one or more users, and evaluate the users' engagement with the information provided (e.g., did the user, customer, central plant engineer, etc., follow the provided steps for implementing a recommendation, did the user discontinue providing inputs to the virtual assistant application 120, etc.), such as to enable the system 100 to update the information generated by the second model 116 for the virtual assistant application 120 according to the engagement. In some implementations, the system 100 can use the second model 116 to detect sentiment of the user of the virtual assistant application 120 and update the second model 116 according to the detected sentiment, such as to improve the experience provided by the virtual assistant application 120.

The applications 120 can include, in some implementations, at least one model and simulation generator application 120. The model and simulation generator application 120 can receive inputs relating to characteristics of a central utility plant and/or a user question (query, prompt, request, etc.) relating to a central utility plant. The model and simulation generator application 120 can provide the inputs to a corresponding second model 116 to cause the second model 116 to generate outputs such as a central utility plant model and/or a set of simulations adapted for providing a response to the user question. The model and simulator generator application 120 can provide features according to process 900 described in detail below, according to some embodiments.

The applications 120 can include at least one maintenance plan generator application 120. The maintenance plan generator application 120 can receive inputs such as information regarding a central utility plant and maintenance performed at the central utility plant, and provide the inputs to the second model 116 to cause the second model 116 to generate outputs for presenting maintenance plan recommendations, such as a plan expected to optimally balance maintenance actions and equipment operating costs (e.g., using teachings of U.S. Publication No. 2021/0223767, the entire disclosure of which is incorporated by reference herein).

In some implementations, the applications 120 can include a product recommendation generator application 120. The product recommendation generator application 120 can process inputs such as information regarding the item of equipment or the service request, using one or more second models 116 (e.g., models trained using central utility plant model and central utility plant description data from the data sources 112), to determine a recommendation of a part or product to replace or otherwise use for repairing the item of equipment. For example, a unit of equipment to add to a central plant (e.g., a type of equipment, a size of the equipment, a particular equipment model name, etc.) can be determined using the product recommendation generator application 120. In some embodiments, the product recommendation generator application 120 implements, adapts, etc. teachings of U.S. Patent No. 11,238,547 and/or U.S. Patent No. 11,042,924, the entire disclosures of which are incorporated by reference herein.

### Feedback Training

Referring further to FIG. 1, the system 100 can include at least one feedback trainer 128 coupled with at least one feedback repository 124. The system 100 can use the feedback trainer 128 to increase the precision and/or accuracy of the outputs generated by the second models 116 according to feedback provided by users of the system 100 and/or the applications 120.

The feedback repository 124 can include feedback received from users regarding output presented by the applications 120. For example, for at least a subset of outputs presented by the applications 120, the applications 120 can present one or more user input elements for receiving feedback regarding the outputs. The user input elements can include, for example, indications of binary feedback regarding the outputs (e.g., good/bad feedback; feedback indicating the outputs do or do not meet the user's criteria, such as criteria regarding technical accuracy or precision); indications of multiple levels of feedback (e.g., scoring the outputs on a predetermined scale, such as a 1-5 scale or 1-10 scale); freeform feedback (e.g., text or audio feedback); or various combinations thereof.

The system 100 can store and/or maintain feedback in the feedback repository 124. In some implementations, the system 100 stores the feedback with one or more data elements associated with the feedback, including but not limited to the outputs for which the feedback was received, the second model(s) 116 used to generate the outputs, and/or input information used by the second models 116 to generate the outputs (e.g., service request information; information captured by the user regarding the item of equipment).

The feedback trainer 128 can update the one or more second models 116 using the feedback. The feedback trainer 128 can be similar to the model updater 108. In some implementations, the feedback trainer 128 is implemented by the model updater 108; for example, the model updater 108 can include or be coupled with the feedback trainer 128. The feedback trainer 128 can perform various configuration operations (e.g., retraining, fine-tuning, transfer learning, etc.) on the second models 116 using the feedback from the feedback repository 124. In some implementations, the feedback trainer 128 identifies one or more first parameters of the second model 116 to maintain as having predetermined values (e.g., freeze the weights and/or biases of one or more first layers of the second model 116), and performs a training process, such as a fine tuning process, to configure parameters of one or more second parameters of the second model 116 using the feedback (e.g., one or more second layers of the second model 116, such as output layers or output heads of the second model 116).

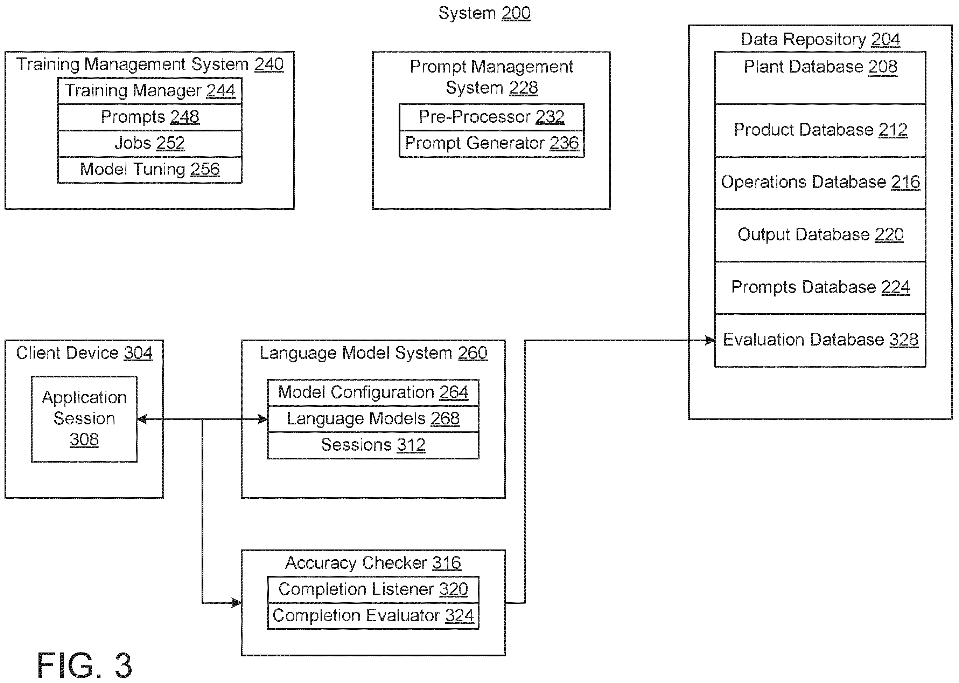

In some implementations, the system 100 may not include and/or use the model updater 108 (or the feedback trainer 128) to determine the second models 116. For example, the system 100 can include or be coupled with an output processor (e.g., an output processor similar or identical to accuracy checker 316 described with reference to FIG. 3) that can evaluate and/or modify outputs from the first model 104 prior to operation of applications 120, including to perform any of various post-processing operations on the output from the first model 104. For example, the output processor can compare outputs of the first model 104 with data from data sources 112 to validate the outputs of the first model 104 and/or modify the outputs of the first model 104 (or output an error) responsive to the outputs not satisfying a validation condition.

### Connected Machine Learning Models

Referring further to FIG. 1, the second model 116 can be coupled with one or more third models, functions, or algorithms for training/configuration and/or runtime operations. The third models can include, for example and without limitation, any of various models relating to items of equipment, such as energy usage models, sustainability models, carbon models, air quality models, or occupant comfort models. For example, the second model 116 can be used to process unstructured information regarding items of equipment into predefined template formats compatible with various third models, such that outputs of the second model 116 can be provided as inputs to the third models; this can allow more accurate training of the third models, more training data to be generated for the third models, and/or more data available for use by the third models. The second model 116 can receive inputs from one or more third models, which can provide greater data to the second model 116 for processing.

### Automated Model Generation and Simulation

The system 100 can be used to generate a central utility plant model based on user input describing characteristics of a central utility plant, where the central utility plant includes textual or audible input to the system 100. The system can use the model 104 and/or the model 116 to identify a plurality of pieces of building equipment satisfying the characteristics of the user input using an AI model based on the user input and to generate a central utility plant model for the central utility plant based on the textual or audible input. The model 104 and/or the model 116 are configured such that the central utility plant model satisfies the characteristics described by the user input and include the identified pieces of building equipment (e.g., virtual representations of the identified equipment and connections therebetween). In some embodiments, the system 100 is also configured to determine simulations to run using the generated central utility plant model, for example based on textual or audible input to the system 100 relating to a user query that can be addressed by executing simulations using the central utility plant model.

### II. SYSTEM ARCHITECTURES FOR GENERATIVE AI APPLICATIONS FOR BUILDING MANAGEMENT SYSTEM AND CENTRAL PLANT MODELING

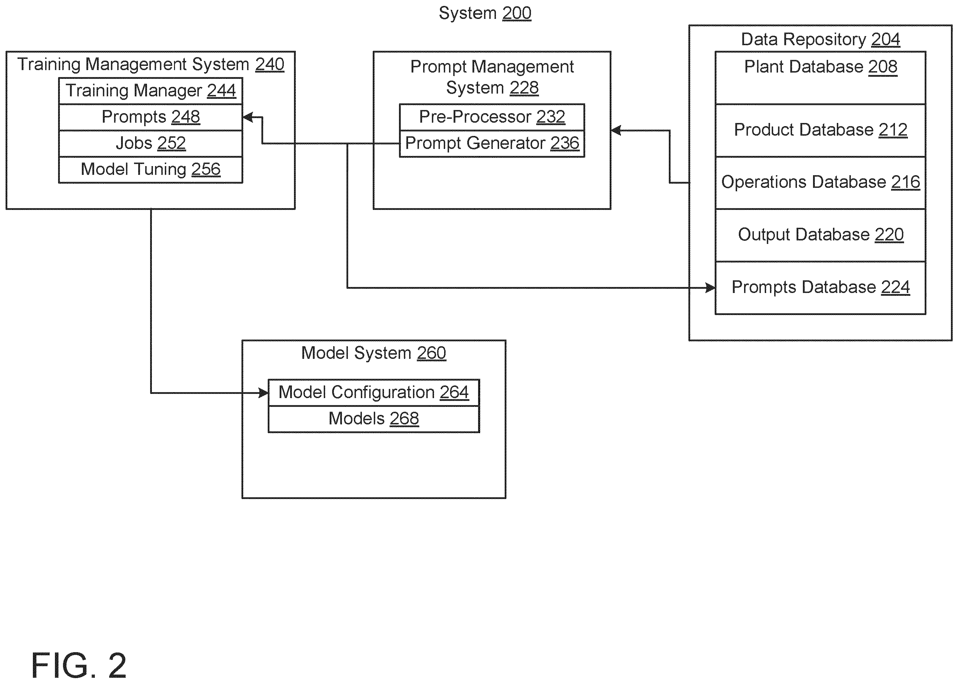

FIG. 2 depicts an example of a system 200. The system 200 can include one or more components or features of the system 100, such as any one or more of the first model 104, data sources 112, second model 116, applications 120, feedback repository 124, and/or feedback trainer 128. The system 200 can perform specific operations to enable generative AI applications for building managements systems and equipment servicing, such as various manners of processing input data into training data (e.g., tokenizing input data; forming input data into prompts and/or completions; etc.) and managing training and other machine learning model configuration processes. Various components of the system 200 can be implemented using one or more computer systems, which may be provided on the same or different processors (e.g., processors communicatively coupled via wired and/or wireless connections).

The system 200 can include at least one data repository 204, which can be similar to the data sources 112 described with reference to FIG. 1. For example, the data repository 204 can include a plant database 208, which can be similar or identical to one or more of data sources 112. For example, the plant database 208 can include data such as central utility plant models; central utility plant descriptions; equipment specification and performance data; and sustainability data.

The data repository 204 can include a product database 212, which can be similar to or include equipment specification data of the data sources 112. The product database 212 can include, for example, data regarding products (e.g., equipment) available from various vendors, specifications or parameters regarding products, and indications of products used for various service operations. The products database 212 can include data such as events or alarms associated with products; logs of product operation; and/or time series data regarding product operation, such as longitudinal data values of operation of products and/or building equipment.

The data repository 204 can include an operations database 216, which can be similar or identical to the equipment performance data and/or equipment specification data of the data sources 112. For example, the operations database 216 can include data such as manuals regarding parts, products, and/or items of equipment; customer service data; and or reports, such as operation or service logs; operating data (e.g., measured consumption or production of equipment; etc.

In some implementations, the data repository 204 can include an output database 220, which can include data of outputs that may be generated by various machine learning models and/or algorithms. For example, the output database 220 can include values of pre-calculated predictions and/or insights, such as parameters regarding operation items of equipment, such as setpoints, changes in setpoints, flow rates, control schemes, identifications of error conditions, central plant models, or various combinations thereof.

As depicted in FIG. 2, the system 200 can include a prompt management system 228. The prompt management system 228 can include one or more rules, heuristics, logic, policies, algorithms, functions, machine learning models, neural networks, scripts, or various combinations thereof to perform operations including processing data from data repository 204 into training data for configuring various machine learning models. For example, the prompt management system 228 can retrieve and/or receive data from the data repository 204, and determine training data elements that include examples of input and outputs for generation by machine learning models, such as a training data element that includes a prompt and a completion corresponding to the prompt, based on the data from the data repository 204.

In some implementations, the prompt management system 228 includes a pre-processor 232. The pre-processor 232 can perform various operations to prepare the data from the data repository 204 for prompt generation. For example, the pre-processor 232 can perform any of various filtering, compression, tokenizing, or combining (e.g., combining data from various databases of the data repository 204) operations.

The prompt management system 228 can include a prompt generator 236. The prompt generator 236 can generate, from data of the data repository 204, one or more training data elements that include a prompt and a completion corresponding to the prompt. In some implementations, the prompt generator 236 receives user input indicative of prompt and completion portions of data. For example, the user input can indicate template portions representing prompts of structured data, such as predefined fields or forms of documents, and corresponding completions provided for the documents. The user input can assign prompts to unstructured data. In some implementations, the prompt generator 236 automatically determines prompts and completions from data of the data repository 204, such as by using any of various natural language processing algorithms to detect prompts and completions from data. In some implementations, the system 200 does not identify distinct prompts and completions from data of the data repository 204.

Referring further to FIG. 2, the system 200 can include a training management system 240. The training management system 240 can include one or more rules, heuristics, logic, policies, algorithms, functions, machine learning models, neural networks, scripts, or various combinations thereof to perform operations including controlling training of machine learning models, including performing fine tuning and/or transfer learning operations.

The training management system 240 can include a training manager 244. The training manager 244 can incorporate features of at least one of the model updaters 108 or the feedback trainer 128 described with reference to FIG. 1. For example, the training manager 244 can provide training data including a plurality of training data elements (e.g., prompts and corresponding completions) to the model system 260 as described further herein to facilitate training machine learning models.

In some implementations, the training management system 240 includes a prompts database 248. For example, the training management system 240 can store one or more training data elements from the prompt management system 228, such as to facilitate asynchronous and/or batched training processes.

The training manager 244 can control the training of machine learning models using information or instructions maintained in a model tuning database 256. For example, the training manager 244 can store, in the model tuning database 256, various parameters or hyperparameters for models and/or model training.

In some implementations, the training manager 244 stores a record of training operations in a jobs database 252. For example, the training manager 244 can maintain data such as a queue of training jobs, parameters or hyperparameters to be used for training jobs, or information regarding performance of training.

Referring further to FIG. 2, the system 200 can include at least one model system 260 (e.g., one or more language model systems). The model system 260 can include one or more rules, heuristics, logic, policies, algorithms, functions, machine learning models, neural networks, scripts, or various combinations thereof to perform operations including configuring one or more machine learning models 268 based on instructions from the training management system 240. In some implementations, the training management system 240 implements the model system 260. In some implementations, the training management system 240 can access the model system 260 using one or more APIs, such as to provide training data and/or instructions for configuring machine learning models 268 via the one or more APIs. The model system 260 can operate as a service layer for configuring the machine learning models 268 responsive to instructions from the training management system 240. The machine learning models 268 can be or include the first model 104 and/or second model 116 described with reference to FIG. 1.

The model system 260 can include a model configuration processor 264. The model configuration processor 264 can incorporate features of the model updater 108 and/or the feedback trainer 128 described with reference to FIG. 1. For example, the model configuration processor 264 can apply training data (e.g., prompts 248 and corresponding completions) to the machine learning models 268 to configure (e.g., train, modify, update, fine-tune, etc.) the machine learning models 268. The training manager 244 can control training by the model configuration processor 264 based on model ^{tuning} parameters in the model tuning database 256, such as to control various hyperparameters for training. In various implementations, the system 200 can use the training management system 240 to configure the machine learning models 268 in a similar manner as described with reference to the second model 116 of FIG. 1, such as to train the machine learning models 268 using any of various data or combinations of data from the data repository 204.

### Application Session Management

FIG. 3 depicts an example of the system 200, in which the system 200 can perform operations to implement at least one application session 308 for a client device 304. For example, responsive to configuring the machine learning models 268, the system 200 can generate data for presentation by the client device 304 (including generating data responsive to information received from the client device 304) using the at least one application session 308 and the one or more machine learning models 268.

The client device 304 can be a device of a user, such as a technician or building manager. The client device 304 can include any of various wireless or wired communication interfaces to communicate data with the model system 260, such as to provide requests to the model system 260 indicative of data for the machine learning models 268 to generate, and to receive outputs from the model system 260. The client device 304 can include various user input and output devices to facilitate receiving and presenting inputs and outputs.

In some implementations, the system 200 provides data to the client device 304 for the client device 304 to operate the at least one application session 308. The application session 308 can include a session corresponding to any of the applications 120 described with reference to FIG. 1. For example, the client device 304 can launch the application session 308 and provide an interface to request one or more prompts. Responsive to receiving the one or more prompts, the application session 308 can provide the one or more prompts as input to the machine learning model 268. The machine learning model 268 can process the input to generate a completion and provide the completion to the application session 308 to present via the client device 304. In some implementations, the application session 308 can iteratively generate completions using the machine learning models 268. For example, the machine learning models 268 can receive a first prompt from the application session 308, determine a first completion based on the first prompt and provide the first completion to the application session 308, receive a second prompt from the application 308, determine a second completion based on the second prompt (which may include at least one of the first prompt or the first completion concatenated to the second prompt), and provide the second completion to the application session 308.

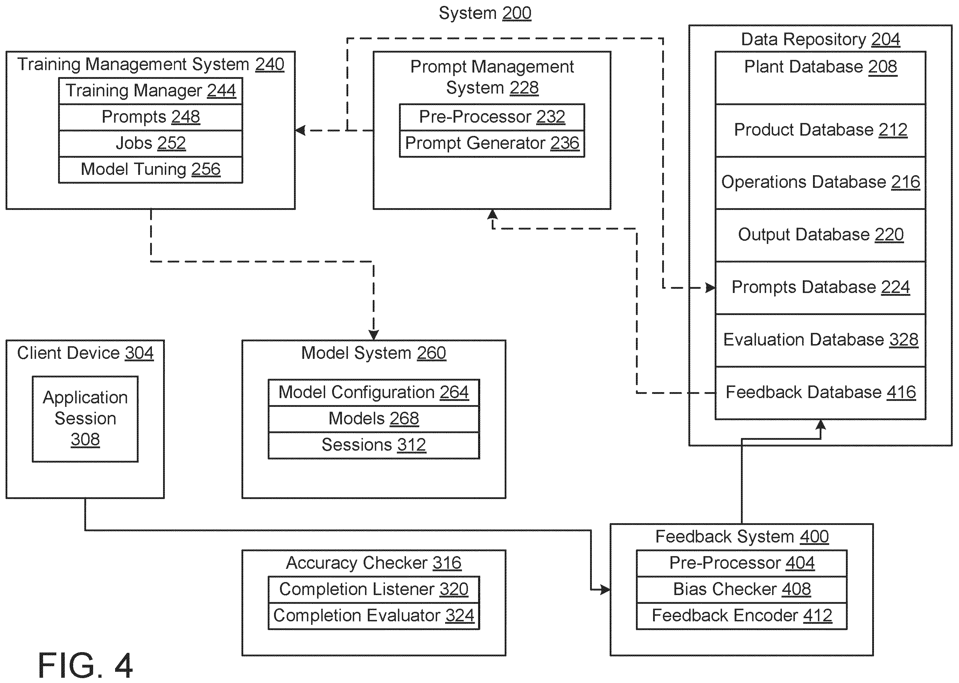

In some implementations, the model system 260 includes at least one sessions database 312. The sessions database 312 can maintain records of application session 308 implemented by client devices 304. For example, the sessions database 312 can include records of prompts provided to the machine learning models 268 and completions generated by the machine learning models 268. As described further with reference to FIG. 4, the system 200 can use the data in the sessions database 312 to fine-tune or otherwise update the machine learning models 268.

### Completion Checking

In some implementations, the system 200 includes an accuracy checker 316. The accuracy checker 316 can include one or more rules, heuristics, logic, policies, algorithms, functions, machine learning models, neural networks, scripts, or various combinations thereof to perform operations including evaluating performance criteria regarding the completions determined by the model system 260. For example, the accuracy checker 316 can include at least one completion listener 320. The completion listener 320 can receive the completions determined by the model system 260 (e.g., responsive to the completions being generated by the machine learning model 268 and/or by retrieving the completions from the sessions database 312).

The accuracy checker 316 can include at least one completion evaluator 324. The completion evaluator 324 can evaluate the completions (e.g., as received or retrieved by the completion listener 320) according to various criteria. In some implementations, the completion evaluator 324 evaluates the completions by comparing the completions with corresponding data from the data repository 204. For example, the completion evaluator 324 can identify data of the data repository 204 having similar text as the prompts and/or completions (e.g., using any of various natural language processing algorithms), and determine whether the data of the completions is within a range of expected data represented by the data of the data repository 204.

In some implementations, the accuracy checker 316 can store an output from evaluating the completion (e.g., an indication of whether the completion satisfies the criteria) in an evaluation database 328. For example, the accuracy checker 316 can assign the output (which may indicate at least one of a binary indication of whether the completion satisfied the criteria or an indication of a portion of the completion that did not satisfy the criteria) to the completion for storage in the evaluation database 328, which can facilitate further training of the machine learning models 268 using the completions and output.

### Feedback Training

FIG. 4 depicts an example of the system 200 that includes a feedback system 400, such as a feedback aggregator. The feedback system 400 can include one or more rules, heuristics, logic, policies, algorithms, functions, machine learning models, neural networks, scripts, or various combinations thereof to perform operations including preparing data for updating and/or updating the machine learning models 268 using feedback corresponding to the application sessions 308, such as feedback received as user input associated with outputs presented by the application sessions 308. The feedback system 400 can incorporate features of the feedback repository 124 and/or feedback trainer 128 described with reference to FIG. 1.

The feedback system 400 can receive feedback (e.g., from the client device 304) in various formats. For example, the feedback can include any of text, speech, audio, image, and/or video data. The feedback can be associated (e.g., in a data structure generated by the application session 308) with the outputs of the machine learning models 268 for which the feedback is provided. The feedback can be received or extracted from various forms of data, including external data sources such as manuals, service reports, or Wikipedia-type documentation.

In some implementations, the feedback system 400 includes a pre-processor 404. The pre-processor 404 can perform any of various operations to modify the feedback for further processing. For example, the pre-processor 404 can incorporate features of, or be implemented by, the pre-processor 232, such as to perform operations including filtering, compression, tokenizing, or translation operations (e.g., translation into a common language of the data of the data repository 204).

The feedback system 400 can include a bias checker 408. The bias checker 408 can evaluate the feedback using various bias criteria, and control inclusion of the feedback in a feedback database 416 (e.g., a feedback database 416 of the data repository 204 as depicted in FIG. 4) according to the evaluation. The bias criteria can include, for example and without limitation, criteria regarding qualitative and/or quantitative differences between a range or statistic measure of the feedback relative to actual, expected, or validated values.

The feedback system 400 can include a feedback encoder 412. The feedback encoder 412 can process the feedback (e.g., responsive to bias checking by the bias checker 408) for inclusion in the feedback database 416. For example, the feedback encoder 412 can encode the feedback as values corresponding to outputs scoring determined by the model system 260 while generating completions (e.g., where the feedback indicates that the completion presented via the application session 308 was acceptable, the feedback encoder 412 can encode the feedback by associating the feedback with the completion and assigning a relatively high score to the completion).

As indicated by the dashed arrows in FIG. 4, the feedback can be used by the prompt management system 228 and training management system 240 to further update one or more machine learning models 268. For example, the prompt management system 228 can retrieve at least one feedback (and corresponding prompt and completion data) from the feedback database 416, and process the at least one feedback to determine a feedback prompt and feedback completion to provide to the training management system 240 (e.g., using pre-processor 232 and/or prompt generator 236, and assigning a score corresponding to the feedback to the feedback completion). The training manager 244 can provide instructions to the model system 260 to update the machine learning models 268 using the feedback prompt and the feedback completion, such as to perform a fine-tuning process using the feedback prompt and the feedback completion. In some implementations, the training management system 240 performs a batch process of feedback-based fine tuning by using the prompt management system 228 to generate a plurality of feedback prompts and a plurality of feedback completion, and providing instructions to the model system 260 to perform the fine-tuning process using the plurality of feedback prompts and the plurality of feedback completions.

### Data Filtering and Validation Systems

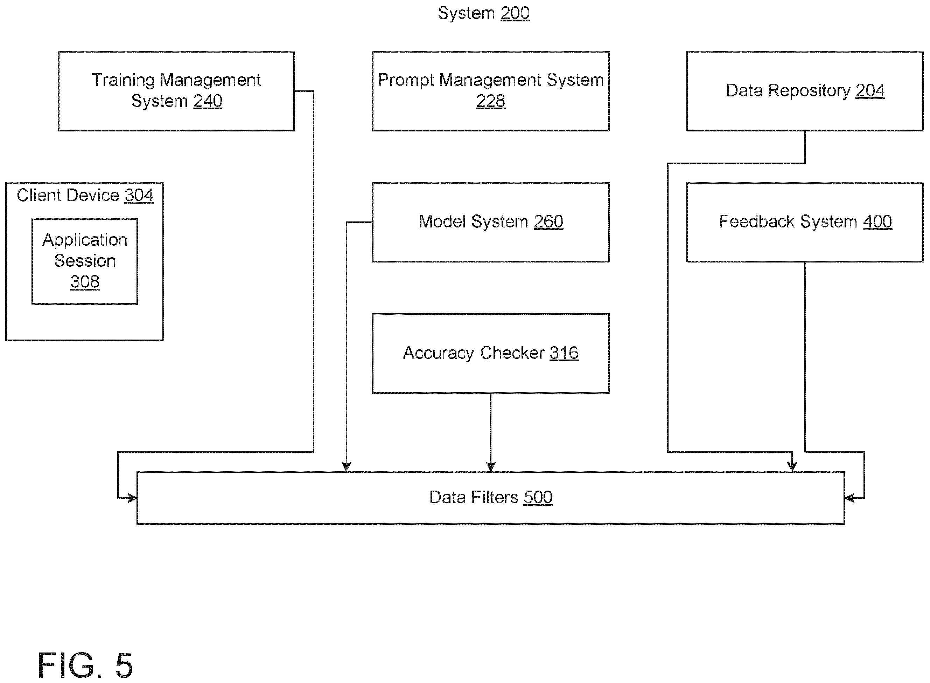

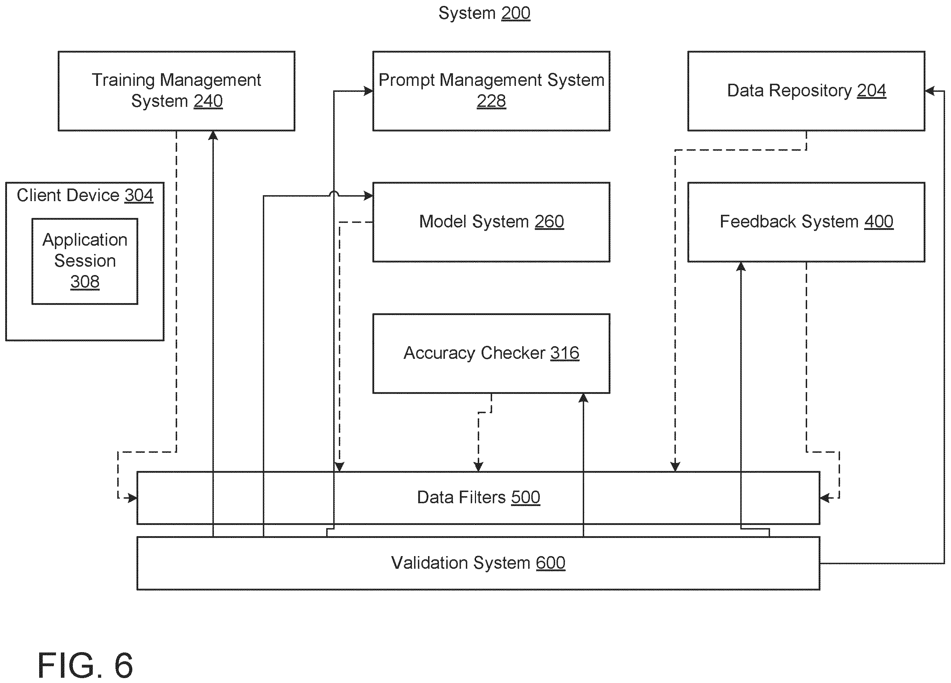

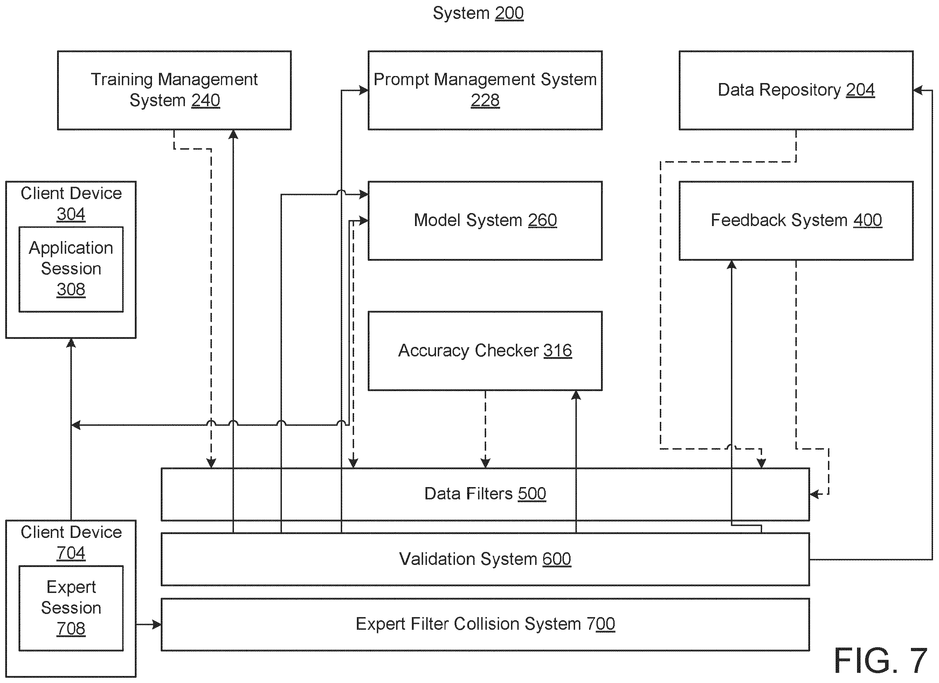

FIG. 5 depicts an example of the system 200, where the system 200 can include one or more data filters 500 (e.g., data validators). The data filters 500 can include any one or more rules, heuristics, logic, policies, algorithms, functions, machine learning models, neural networks, scripts, or various combinations thereof to perform operations including modifying data processed by the system 200 and/or triggering alerts responsive to the data not satisfying corresponding criteria, such as thresholds for values of data. Various data filtering processes described with reference to FIG. 5 (as well as FIGS. 6 and 7) can enable the system 200 to implement timely operations for improving the precision and/or accuracy of completions or other information generated by the system 200 (e.g., including improving the accuracy of feedback data used for fine-tuning the machine learning models 268). The data filters 500 can allow for interactions between various algorithms, models, and computational processes.

For example, the data filters 500 can be used to evaluate data relative to thresholds relating to data including, for example and without limitation, acceptable data ranges, setpoints, temperatures, pressures, flow rates (e.g., mass flow rates), or vibration rates for an item of equipment. The threshold can include any of various thresholds, such as one or more of minimum, maximum, absolute, relative, fixed band, and/or floating band thresholds.

The data filters 500 can enable the system 200 to detect when data, such as prompts, completions, or other inputs and/or outputs of the system 200, collide with thresholds that represent realistic behavior or operation or other limits of items of equipment. For example, the thresholds of the data filters 500 can correspond to values of data that are within feasible or recommended operating ranges. In some implementations, the system 200 determines or receives the thresholds using models or simulations of items of equipment, such as plant or equipment simulators, chiller models, HVAC-R models, refrigeration cycle models, etc. The system 200 can receive the thresholds as user input (e.g., from experts, technicians, or other users). The thresholds of the data filters 500 can be based on information from various data sources. The thresholds can include, for example and without limitation, thresholds based on information such as equipment limitations, safety margins, physics, expert teaching, etc. For example, the data filters 500 can include thresholds determined from various models, functions, or data structures (e.g., tables) representing physical properties and processes, such as physics of psychometrics, thermodynamics, and/or fluid dynamics information.

The system 200 can determine the thresholds using the feedback system 400 and/or the client device 304, such as by providing a request for feedback that includes a request for a corresponding threshold associated with the completion and/or prompt presented by the application session 308. For example, the system 200 can use the feedback to identify realistic thresholds, such as by using feedback regarding data generated by the machine learning models 268 for ranges, setpoints, and/or start-up or operating sequences regarding items of equipment (and which can thus be validated by human experts). In some implementations, the system 200 selectively requests feedback indicative of thresholds based on an identifier of a user of the application session 308, such as to selectively request feedback from users having predetermined levels of expertise and/or assign weights to feedback according to criteria such as levels of expertise.

In some implementations, one or more data filters 500 correspond to a given setup. For example, the setup can represent a configuration of a corresponding item of equipment (e.g., configuration of a chiller, etc.). The data filters 500 can represent various thresholds or conditions with respect to values for the configuration, such as feasible or recommendation operating ranges for the values. In some implementations, one or more data filters 500 correspond to a given situation. For example, the situation can represent at least one of an operating mode or a condition of a corresponding item of equipment.

FIG. 5 depicts some examples of data (e.g., inputs, outputs, and/or data communicated between nodes of machine learning models 268) to which the data filters 500 can be applied to evaluate data processed by the system 200 including various inputs and outputs of the system 200 and components thereof. This can include, for example and without limitation, filtering data such as data communicated between one or more of the data repositories 204, prompt management system 228, training management system 240, model system 260, client device 304, accuracy checker 316, and/or feedback system 400. For example, the data filters 500 (as well as validation system 600 described with reference to FIG. 6 and/or expert filter collision system 700 described with reference to FIG. 7) can receive data outputted from a source (e.g., source component) of the system 200 for receipt by a destination (e.g., destination component) of the system 200, and filter, modify, or otherwise process the outputted data prior to the system 200 providing the outputted data to the destination. The sources and destinations can include any of various combinations of components and systems of the system 200.

The system 200 can perform various actions responsive to the processing of data by the data filters 500. In some implementations, the system 200 can pass data to a destination without modifying the data (e.g., retaining a value of the data prior to evaluation by the data filter 500) responsive to the data satisfying the criteria of the respective data filter(s) 500. In some implementations, the system 200 can at least one of (i) modify the data or (ii) output an alert responsive to the data not satisfying the criteria of the respective data filter(s) 500. For example, the system 200 can modify the data by modifying one or more values of the data to be within the criteria of the data filters 500.

In some implementations, the system 200 modifies the data by causing the machine learning models 268 to regenerate the completion corresponding to the data (e.g., for up to a predetermined threshold number of regeneration attempts before triggering the alert). This can enable the data filters 500 and the system 200 selectively trigger alerts responsive to determining that the data (e.g., the collision between the data and the thresholds of the data filters 500) may not be repairable by the machine learning model 268 aspects of the system 200.

The system 200 can output the alert to the client device 304. The system 200 can assign a flag corresponding to the alert to at least one of the prompts (e.g., in prompts database 224) or the completion having the data that triggered the alert.

FIG. 6 depicts an example of the system 200, in which a validation system 600 is coupled with one or more components of the system 200, such as to process and/or modify data communicated between the components of the system 200. For example, the validation system 600 can provide a validation interface for human users (e.g., expert supervisors, checkers) and/or expert systems (e.g., data validation systems that can implement processes analogous to those described with reference to the data filters 500) to receive data of the system 200 and modify, validate, or otherwise process the data. For example, the validation system 600 can provide to human expert supervisors, human checkers, and/or expert systems various data of the system 200, receive responses to the provided data indicating requested modifications to the data or validations of the data, and modify (or validate) the provided data according to the responses.

For example, the validation system 600 can receive data such as data retrieved from the data repository 204, prompts outputted by the prompt management system 228, completions outputted by the model system 260, indications of accuracy outputted by the accuracy checker 316, etc., and provide the received data to at least one of an expert system or a user interface. In some implementations, the validation system 600 receives a given item of data prior to the given item of data being processed by the model system 260, such as to validate inputs to the machine learning models 268 prior to the inputs being processed by the machine learning models 268 to generate outputs, such as completions.

In some implementations, the validation system 600 validates data by at least one of (i) assigning a label (e.g., a flag, etc.) to the data indicating that the data is validated or (ii) passing the data to a destination without modifying the data. For example, responsive to receiving at least one of a user input (e.g., from a human validator/supervisor/expert) that the data is valid or an indication from an expert system that the data is valid, the validation system 600 can assign the label and/or provide the data to the destination.

The validation system 600 can selectively provide data from the system 200 to the validation interface responsive to operation of the data filters 500. This can enable the validation system 600 to trigger validation of the data responsive to collision of the data with the criteria of the data filters 500. For example, responsive to the data filters 500 determining that an item of data does not satisfy a corresponding criterion, the data filters 500 can provide the item of data to the validation system 600. The data filters 500 can assign various labels to the item of data, such as indications of the values of the thresholds that the data filters 500 used to determine that the item of data did not satisfy the thresholds. Responsive to receiving the item of data from the data filters 500, the validation system 600 can provide the item of data to the validation interface (e.g., to a user interface of client device 304 and/or application session 308; for comparison with a model, simulation, algorithm, or other operation of an expert system) for validation. In some implementations, the validation system 600 can receive an indication that the item of data is valid (e.g., even if the item of data did not satisfy the criteria of the data filters 500) and can provide the indication to the data filters 500 to cause the data filters 500 to at least partially modify the respective thresholds according to the indication.

In some implementations, the validation system 600 selectively retrieves data for validation where (i) the data is determined or outputted prior to use by the machine learning models 268, such as data from the data repository 204 or the prompt management system 228, or (ii) the data does not satisfy a respective data filter 500 that processes the data. This can enable the system 200, the data filters 500, and the validation system 600 to update the machine learning models 268 and other machine learning aspects (e.g., generative AI aspects) of the system 200 to more accurately generate data and completions (e.g., enabling the data filters 500 to generate alerts that are received by the human experts/expert systems that may be repairable by adjustments to one or more components of the system 200).

FIG. 7 depicts an example of the system 200, in which an expert filter collision system 700 ("expert system" 700) can facilitate providing feedback and providing more accurate and/or precise data and completions to a user via the application session 308. For example, the expert system 700 can interface with various points and/or data flows of the system 200, as depicted in FIG. 7, where the system 200 can provide data to the expert filter collision system 700, such as to transmit the data to a user interface and/or present the data via a user interface of the expert filter collision system 700 that can accessed via an expert session 708 of a client device 704. For example, via the expert session 708, the expert system 700 can enable functions such as receiving inputs for a human expert to provide feedback to a user of the client device 304; a human expert to guide the user through the data (e.g., completions) provided to the client device 304, such as reports, insights, and action items; a human expert to review and/or provide feedback for revising insights, guidance, and recommendations before being presented by the application session 308; a human expert to adjust and/or validate insights or recommendations before they are viewed or used for actions by the user; or various combinations thereof. In some implementations, the expert system 700 can use feedback received via the expert session as inputs to update the machine learning models 268 (e.g., to perform fine-tuning).

In some implementations, the expert system 700 retrieves data to be provided to the application session 308, such as completions generated by the machine learning models 268. The expert system 700 can present the data via the expert session 708, such as to request feedback regarding the data from the client device 704. For example, the expert system 700 can receive feedback regarding the data for modifying or validating the data (e.g., editing or validating completions). In some implementations, the expert system 700 requests at least one of an identifier or a credential of a user of the client device 704 prior to providing the data to the client device 704 and/or requesting feedback regarding the data from the expert session 708. For example, the expert system 700 can request the feedback responsive to determining that the at least one of the identifier or the credential satisfies a target value for the data. This can allow the expert system 700 to selectively identify experts to use for monitoring and validating the data.

In some implementations, the expert system 700 facilitates a communication session regarding the data, between the application session 308 and the expert session 708. For example, the expert system 700, responsive to detecting presentation of the data via the application session 308, can request feedback regarding the data (e.g., user input via the application session 308 for feedback regarding the data), and provide the feedback to the client device 704 to present via the expert session 708. The expert session 708 can receive expert feedback regarding at least one of the data or the feedback from the user to provide to the application session 308. In some implementations, the expert system 700 can facilitate any of various real-time or asynchronous messaging protocols between the application session 308 and expert session 708 regarding the data, such as any of text, speech, audio, image, and/or video communications or combinations thereof. This can allow the expert system 700 to provide a platform for a user receiving the data (e.g., customer or field technician) to receive expert feedback from a user of the client device 704 (e.g., expert technician). In some implementations, the expert system 700 stores a record of one or more messages or other communications between the sessions 308, 708 in the data repository 204 to facilitate further configuration of the machine learning models 268 based on the interactions between the users of the sessions 308, 708.

### Building Data Platforms and Digital Twin Architectures

Referring further to FIGS. 1-7, various systems and methods described herein can be executed by and/or communicate with building data platforms, including data platforms of building management systems. For example, the data repository 204 can include or be coupled with one or more building data platforms, such as to ingest data from building data platforms and/or digital twins. The client device 304 can communicate with the system 200 via the building data platform, and can feedback, reports, and other data to the building data platform. In some implementations, the data repository 204 maintains building data platform -specific databases, such as to enable the system 200 to configure the machine learning models 268 on a building data platform-specific basis (or on an entity-specific basis using data from one or more building data platforms maintained by the entity).

For example, in some implementations, various data discussed herein may be stored in, retrieved from, or processed in the context of building data platforms and/or digital twins; processed at (e.g., processed using models executed at) a cloud or other off-premises computing system/device or group of systems/devices, an edge or other on-premises system/device or group of systems/devices, or a hybrid thereof in which some processing occurs off-premises and some occurs on-premises; and/or implemented using one or more gateways for communication and data management amongst various such systems/devices. In some such implementations, the building data platforms and/or digital twins may be provided within an infrastructure such as those described in U.S. Patent Application Nos. 17/134,661 filed December 28, 2020, 18/080,360, filed December 13, 2022, 17/537,046 filed November 29, 2021, and 18/096,965, filed January 13, 2023, and Indian Patent Application No. 202341008712, filed February 10, 2023, the disclosures of which are incorporated herein by reference in their entireties.

### III. GENERATIVE AI-BASED SYSTEMS AND METHODS FOR EQUIPMENT SERVICING

As described above, systems and methods in accordance with the present disclosure can use machine learning models, including LLMs and other generative AI models, to ingest data regarding building management systems and equipment in various unstructured and structured formats, and generate completions and other outputs targeted to provide useful information to users. Various systems and methods described herein can use machine learning models to support applications for presenting data with high accuracy and relevance.

### IV. CENTRAL UTILITY PLANT MODELLING AND SIMULATION

Referring now to FIG. 8, a flow diagram of a process 900 for generating a central utility plant model and providing a response to a user query relating to the central utility plant is shown, according to some embodiments. Process 900 can be performed using various devices and systems described herein, including but not limited to the systems 100, 200 or one or more components thereof. Various aspects of the process 900 can be implemented using one or more devices or systems that are communicatively coupled with one another, including in client-server, cloud-based, or other networked architectures. Process 900 can be implemented as part of the systems and processes of, or using teachings adapted from, U.S. Patent Application No. 17/826,635, filed May 27, 2022, the entire disclosure of which is incorporated by reference herein.

At step 902, user input describing characteristics of a central utility plant are received, for example by one or more processors. The user input can be received via a client device 304, for example. The user input can include textual or audible input, for example input received via a free-text field of graphical user interface and/or via a microphone receiving audible input (e.g., spoken description) from a user. For example, a user may describe to the client device 304 (e.g., in an application session 308) characteristics of the central utility plant including what equipment is located in the plant, an arrangement of the equipment in the plant, the climate of the location of the central utility plant, a description of the type of building(s) served by the central utility plant, a size of the central utility plant, etc. and such description is received in step 902. In some embodiments, the user input received in step 902 also includes documentation, data, etc. relating to the central plant, for example project documentation from construction of the central plant, requisition of central plant equipment, and/or installation or service of central plant equipment (e.g., blueprints, plant configuration plans, scope of work documents, bills of materials, invoices, etc.). The user input can thus include a variety of unstructured data describing characteristics of the central utility plant.

At step 904, a plurality of pieces of building equipment satisfying the characteristics of the user input are identified using at least one artificial intelligence (AI) model, for example at least one generative AI model. The plurality of pieces of building equipment determined in step 904 can include identifiers of the type of the pieces (e.g., chiller, boiler, etc.), a model type/number (e.g., a particular model of chiller or boiler), and/or other characteristics of the equipment (e.g., maximum capacity, inputs of the equipment, outputs of the equipment, etc.). To enable step 904, the at least one AI model (e.g., generative AI model) can be fine-tuned using domain-specific training data including lists of pieces of building equipment present in central utility plants and user descriptions of such central utility plants, using the techniques described in detail above. Accordingly, at least one AI model can be configured for use in step 904 to predict the pieces of building equipment present in a central plant based on the user input describing characteristics of the central utility plant.

In some embodiments, step 904 includes a conversational interaction, generated by one or more processors using at least one generative AI model, in which the system prompts the user for further information to help guide identification of the plurality of pieces of building equipment. For example, if the initial user input identifies that the central plant includes chillers, step 904 can include using at least one generative AI model to provide conversational feedback to the user prompting the user to indicate how many chillers are included, what different models or types of chillers are included, etc. Step 904 can thus include providing interactions with a user that result in collection of additional description of the central utility plant and use of such additional description to identify the pieces of building equipment of the central plant.

At step 906, using the at least one AI model, a central utility plant model of the central utility plant is generated based on the textual or audible input such that the central utility plant model satisfies the characteristics and includes the identified pieces of building equipment. Step 906 can include providing the central utility plant model according to a template for central utility plant models such that the central utility plant model is a suitable format, data structure, etc. for use further processing steps involving the central utility plant model. The AI model can generate data confirming to the template, consistent with teachings elsewhere herein. Step 906 can include identifying connections between the identified pieces of the building equipment, for example such that the central utility plant model indicates resources which flow between certain pieces of equipment and/or other interrelationships between equipment of the central utility plant model. The central utility plant model generated in step 906 can be consistent with the plant models described and/or use in U.S. Patent Application No. 17/826,635, filed May 27, 2022, U.S. Patent No. 10,706,375 granted July 8, 2020, and/or U.S. Patent No. 11,238,547 granted February 1, 2022, and/or U.S. Application No. 17/733,786 filed April 29, 2022, the entire disclosures of which are incorporated by reference herein.

In some embodiments, step 906 includes a conversational interaction, generated by one or more processors using at least one generative AI model, in which the system prompts the user for further information to help guide generating of the central utility plant model. For example, at least one generative AI model may be configured provide conversational feedback to the user prompting the user to describe connections between certain of the identified pieces of equipment which may not have been described or implied by the user's prior inputs. Step 906 can include prompting the user to confirm certain determinations made by the at least one AI model, for prompting the user to indicate whether two identified pieces of equipment are connected in a manner estimated by the at least one AI model. Step 906 can thus include providing interactions with a user that result in collection of additional description of the central utility plant and use of such additional description to generate the central utility plant model.

A central utility plant model is thereby generated in process 900 based on natural language inputs or other unstructured data inputs from a user. In some embodiments, the central utility plant model is thereby generated without the user directly manipulating structured data in the template format for the central utility plant model. A user can thus use process 900 and the systems herein to generate a central utility plant model without needing expertise in the modeling techniques used, details of the model template, other programming skills, etc. In some embodiments, process 900 can include providing the central utility plant model (e.g., a visualization thereof) to the user for review, approval, adjustment, and/or feedback. Any feedback or adjustments provided with respect to the central utility plant model can be used for further training and fine-tuning of the at least one AI model used in steps 904 and 906, for example with the goal of driving model training to reduce any need for manual user adjustment of central utility plant models output by the at least one AI models. Various teachings above can be used to implement such model improvements over time.

The central utility plant model can be used for a variety of simulation tasks, online control (e.g., for optimally allocating demand and/or resources across equipment of the central plant, determining optimal settings for equipment of the central plant, etc.), fault detection or diagnosis, among other advantageous features that can be enabled by an accurate and efficiently-generated central utility plant model. Steps 908-912 described in the following passages, provide for use of the central utility plant model generated via steps 902-906, according to some embodiments.

At step 908, a user query is received (e.g., by one or more processors) relating to a desired outcome for the central utility plant as an unstructured natural language input. For example, the user query can be received as textual or audible input from a user via a client device 304. The user query can indicate a desired outcome for the central utility plant, for example a reduction in usage of a particular resource, a reduction in costs, a net energy consumption target, a goal of meeting a budget for resource consumption, a goal of meeting a planned change in demand on the central utility plant (e.g., due to additions to building(s) served by the central utility plant, etc.). To provide illustrative examples, the user query may be "how can I save 20% of water," "how can I reduce investment by 10%," "how can the central plant be updated to provide 20% more cooling," etc., according to various examples and goals. In some embodiments, the user query can provided additional constraints or degrees of freedom, for example indicating that certain aspects of the central plant should not change (e.g., "how can the plant achieve X without changing Y"), indicating that the additions can be made to the central plant (e.g., "what equipment options do I have for changing the plant to provide Z load," "what equipment options do I have for reducing carbon emissions," etc.), providing other constraints (e.g., "options should be less than $X in initial investment"), or indicating that the result should relate to a particular operating parameter (e.g., "how should I change the supply water temperature setpoint to achieve... ", etc.). Any such information defining the scope and purpose of the user's query can be provided by the user and received in step 908. In some embodiments, step 908 includes providing a conversational interaction to the user which prompts the user to clarify any additional aspects of the user request to ensure the input received in step 908 accurately and sufficiently defines the user's query in a manner suitable for used by the at least one generative AI models in step 910 as described in the following passage.

At step 910, a set of simulations is configured, based on the user query and using at least one AI model (e.g., at least one generative AI model). The user query can be an input to the at least one AI model. The set of simulations are configured to provide information which can provide a response to the user query. For instance, certain variations in building operations, certain external conditions (e.g., weather conditions), certain variations in plant equipment including in the central plant, etc. can be determined by the at least one AI model for exploring scenarios contemplated by the user's query. Step 910 can include defining the duration of simulations, the starting conditions for simulations, weather or other conditions to occur during the simulations, changes in equipment settings or equipment availability in different simulations, and various other simulation parameters, in various embodiments. The set of simulations determined in step 910 can include the relevant simulation parameters to determining a response to the user query.

Step 910 can be executed by a generative AI model by providing an output in a template format (e.g., a structured format for simulation parameters) based on the unstructured user query, with the generative AI model trained on training data that includes user queries and corresponding sets of simulation parameters (e.g., simulation parameters carefully chosen by expert users) and/or data indicating the relevance of the output of different simulations to different user queries. Step 910 can thereby include predicting, by at least one AI model, that a simulation will provide relevant information to the user query and including that simulation in the set of simulations, while omitting simulations predicted as not providing relevant information to the user query. Step 910 thereby provides for automated, intelligent simulation selection and configuration that can automatically omit simulations not predicted to result in relevant information to the user query. Because executing simulations can be computationally resource intensive, step 910 can result in reduced computational costs for generating a response to the user query by providing for the omission of some simulations that might otherwise be executed.

At step 912, a response to the user query is determined by running the system of simulations using the central utility plant model (e.g., the central utility plant model from step 906). Step 912 can include comparing simulation results according to the teachings of U.S. Patent Application No. 17/826,635, filed May 27, 2022, according to some embodiments. Step 912 can include be provided by adapting teachings of U.S. Patent No. 11,238,547, granted July 22, 2019, relating to determining a recommend size for an asset to be added to a central plant or building, in some embodiments. Step 912 can include providing an analytical comparison of different simulations, for example comparing the costs, resource usage, equipment degradation, etc. resulting from different simulations to identify the simulation having parameters that best aligns with the user query (e.g., identifying simulations in which energy was saved by an amount requested in the user query, identifying a simulation in which the most efficient performance was achieved, etc.) and identifying such parameters as corresponding to solutions to the user query. Step 912 can also include generating, for example by at least one generative AI model trained according to the teachings herein, a descriptive, textual, etc. explanation of the results of the simulations and/or of an answer to the user query based on comparison of the results of the various simulations. Process 900 can thereby provide the user with a natural language answer to a natural language query by running structured simulations using a structured central utility plant model, without requiring that the user interact directly with the simulations or the central utility plant model.

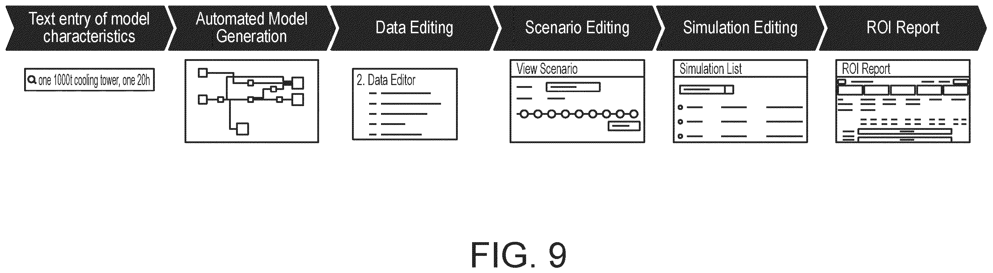

In some embodiments, step 902, step 904, and step 906 are performed while omitting step 908, step 910, and step 912. An example of such embodiments is shown in FIG. 9, where entry of model characteristics and automated model generation is performed to provide a central utility plant model according to step 908, step 910, and step 912 and then data editing, scenario editing, and simulation editing are performed with direct user interaction in order to generate a report of results of a simulation (e.g., a return on investment report).

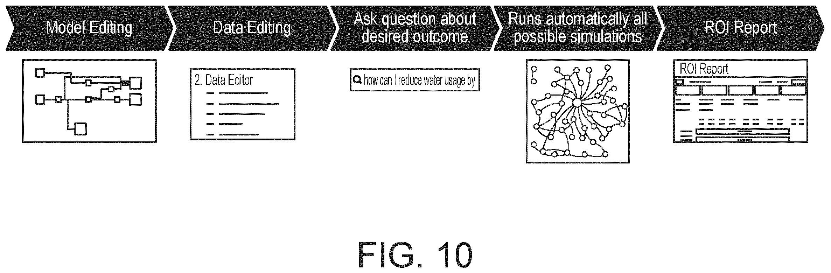

In some embodiments, step 908, step 910, and step 912 are performed without executing step 902, step 904, and step 906 (e.g., using a central plant model created some other way). An example of such embodiments is shown in FIG. 10, where model editing is provided without using the teachings of step 902, step 904, and/or step 906 (e.g., by manual model editing without requiring use of AI), and a user can ask a question about a desired outcome and the question is sued to generate and run simulations to output a report as in step 908-912.

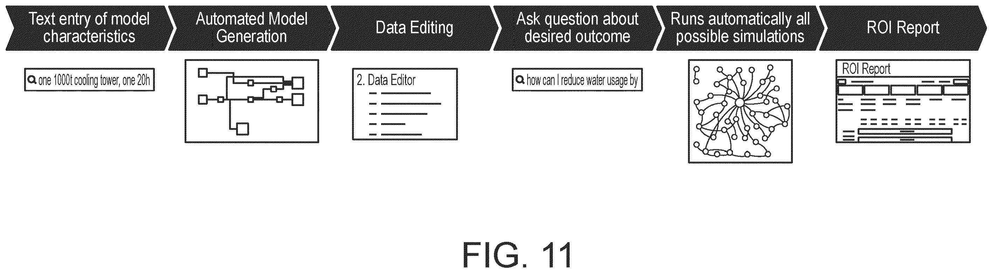

In some embodiments, process 900 is executed in full. An example of such embodiments is shown in FIG. 11, wherein free-text entry (e.g., natural language input, textual input, audio input) is accepted from a user to both describe characteristics of a central plant and to ask a question about a desired outcome, with the artificial intelligence approaches of process 900 used both in automated model generation and in automated simulation configuration and simulation running to generate a report.

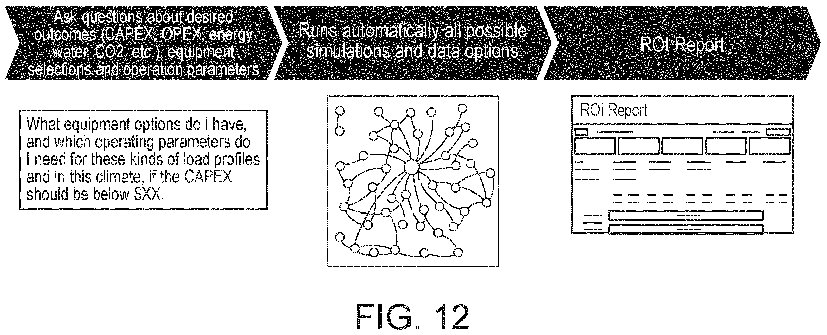

User queries that can be answered in process 900 can be of varying complexity in various embodiments. An example showing a query providing additional details (e.g., constraints, degrees of freedom) for the process 900 to handle is shown in FIG. 12. FIG. 12 illustrates that questions input by users can relate to desired outcomes (e.g., as measured by different performance variables), equipment selections (e.g., new equipment to install, equipment to remove, etc.), and operation parameters (e.g., each setpoints, control decisions, settings), and that the teachings of process 900 and elsewhere herein can be enabled to handle any such user inputs in configuring and running relevant simulations to provide a report responsive to the user query.

### V. AUTOMATED CONTROLLER PROGRAMMING BASED ON FREE-FORM INPUT

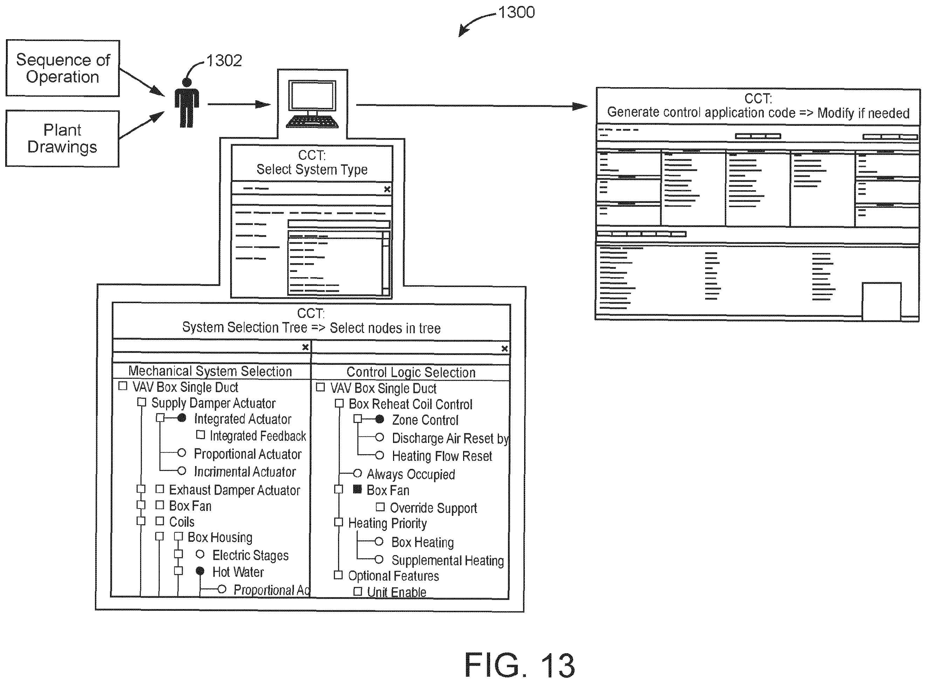

Referring now to FIGS. 13-16, systems and methods relating to generating control applications, installing control applications on building controllers, and controlling equipment by executing the control applications are shown, according to various embodiments. The systems and methods of FIGS. 13-16 can be implemented various combinations of the teachings above, in various embodiments.

The features of FIGS. 13-16 related to building controllers for installation with building equipment that operates to serve a building, for example to providing heating, ventilation, and/or cooling to a building. Building equipment can include heating, ventilation and/or cooling (HVAC) equipment such as air handling units, variable air volume boxes, chillers, boilers, heaters, room air conditioners, rooftop units, variable refrigerant flow systems, heat pumps, cooling towers, energy storage systems (e.g., batteries, thermal storage tanks, etc.), energy generation systems (e.g., natural gas generators, gasoline generators, photovoltaic systems, geothermal systems, etc.), etc., in various embodiments.

Such equipment can be electronically controlled by controllers, e.g., computing hardware including memory, one or more processors, input ports, output ports, etc. that can be installed with such equipment to communicate with the equipment and with one or more sensors in a building. Controllers can execute control applications provide building equipment with its desired operational behaviors, for example to determine when a unit of building equipment should operate (e.g., on/off decisions), operating parameters for the building equipment (e.g., fan speeds, damper positions, valve positions, compressor frequency, setpoints, etc.), and other control decisions for the building equipment. However, the particular control application suitable for any given controller is particular to the model of equipment to be controlled, characteristics of the building space served by the equipment, availability of sensors and/or other data sources, occupant preferences or other goals for a space (e.g., target building conditions, compliance standards requiring particular indoor air conditions, etc.), etc. Accordingly, particular controllers should be programmed with appropriate control applications suitable for the particular use for each controller. Thus, especially in large, complex building with various building equipment, building spaces, etc., it can be challenging to properly generate and install suitable control applications for different controllers in a reliable and efficient manner.

FIG. 13 illustrates an existing approach to creating control applications for building controllers using a manual approach. As illustrated in FIG. 13, a diagram 1300 shows a person 1302 using a computer to interact with a controller configuration tool. The person 1302 is required to be a highly trained, technically skilled individual who can read sequence of operation and plant drawings information and manipulate the controller configuration tool to manually select options in the controller configuration tool. Upon selection by a user of high-level options in a first, the controller configuration tool provides a system selection tree in which the user is to select various nodes. The system selection tree is such that nodes can be selected at various levels of the system selection tree by the user in an effort to describe the system apparent in the sequence of operations and plant drawings information being read by the person 1302. FIG. 13 illustrates that the controller configuration tool then generates a control application based on the user selections (e.g., by presented a combination of selected code modules) and provides options for a user to modify the control application as needed. Such a process introduces opportunities for user error that can affect building operations once the control application is being executed online and requires time-consuming, expert interaction by the person 1302. Accordingly, a technical solution which provides for autonomous generation of control applications in an efficient and reliable manner is desirable to improve both the generation and installation of control applications on building controllers and operation of the building controllers online to effectively and efficiently control building equipment to provide desired behavior of building equipment.

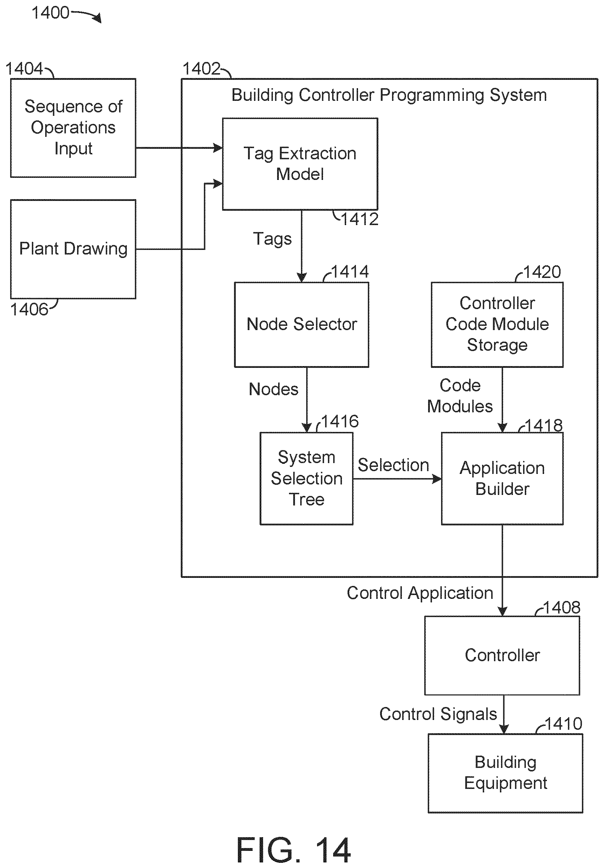

FIG. 14 shows a block diagram of a system 1400 for generating and installing control applications and for controlling building equipment by executing such control applications. The system 1400 can be implemented using various features above, for example by integrating or otherwise adapting system 100 and/or system 200 as described above. The system 1400 is shown as including a building controller programming system 1402 which can be implemented as one or more non-transitory computer-readable media and one or more processors, where the one or more non-transitory computer-readable media store programming instructions that, when executed by the one or more processors, cause the one or more processors to perform the operations attributed to the building controller programming system 1402 in the following description. The one or more non-transitory computer-readable media can also store other data, controller code modules, models, etc. used by building controller programming system 1402 as described herein.

The building controller programming system 1402 is shown as receiving a sequence of operations input 1404 and a plant drawing 1406. In some embodiments, the sequence of operations input 1404 or the plant drawing 1406 is omitted. The building controller programming system 1402 is further shown as outputting a control application to a controller 1408 (e.g., causing installation of the control application on the controller 1408), with the controller 1408 executing the control application to generate control signals for building equipment 1410. The building controller programming system 1402 is configured such that the control application provided to the controller 1408 causes the controller 1408 to control the building equipment 1410 in accordance with a sequence of operations described in the sequence of operations input 1404 and/or as indicated by the plant drawings 1406.

The sequence of operations input 1404 describes, in free-form text (natural language, unstructured, etc.) desired operations of a unit of equipment. For example, the sequence of operations input 1404 may describe a type of equipment to be provided and how the equipment should behave under various conditions. Sequence of operations input can be written by system designers, project managers, customers, or the like. Sequence of operations input can describe different building conditions (e.g., temperature, pressure, humidity, airflow, air quality), operations (e.g., on, off, setpoints, schedules, targets, etc.), data inputs (e.g., sensors, external data sources, etc.) as may be suitable to describe the relevant equipment and desired building system performance. Because sequence of operations input 1404 is free-form text, different sequence of operation inputs 1404 can describe either the same or different sequences of operation.

The plant drawing 1406 can include by a drawing (diagram, blue print, design document, etc.) of a plant (e.g., a central utility plant of a building or campus, system of airside building equipment, combination of waterside and airside equipment, other system serving a building). The drawing can indicate relationships between equipment and other equipment, relationships between equipment and building spaces, desired operations of equipment, etc. Various types of drawings can be encompassed by the plant drawing 1406 of system 1400 in various embodiments.

The building controller programming system 1402 is shown as including a tag extraction model 1412. The tag extraction model 1412 is configured to process the sequence of operations input 1404 and/or the plant drawing 1406 and extract tags from such input data. The tags can be keywords, key terms, key concepts, etc. represented in the sequence of operations input 1404 and/or the plant drawing 1406.

In some embodiments, the tag extraction model 1412 is or includes a natural language processing model configured to identify tags present in the natural language processing model. The natural language processing model can be an artificial intelligence model (e.g., neural network, large language model, etc.) configured to determine a probability score for each of set of possible tags indicating the probability that the associated score is present in the input data (e.g., in the sequence of operations input) and tags are identified from the set of possible tags as those tags having probability scores exceeding a threshold. The natural language processing model can be trained or fine-tuned using a training dataset of sequence of operations data and manually identified tags, for example using a supervised learning approach, such that the natural language processing model is adapted to identify tags particularly relating to building equipment operations. The tag extraction model 1412 can thereby identifies tags (e.g., keywords, concepts, etc.) present in the sequence of operations input 1404.

In other embodiments, the tag extraction model 1412 is or includes a generative artificial intelligence model configured to generate tags based on the sequence of operations input 1404 and/or the plant drawing 1406. The generative artificial intelligence model can be prompted to output a set of tags based on the content of the sequence of operations input 1404 and/or the plant drawing 1406. The generative artificial intelligence model can be fine-tuned based on training dataset of sequence of operations data, plant drawings, and manually identified tags such that the generative artificial intelligence model is adapted to identify tags particularly relating to building equipment operations. In some embodiments, the tag extraction model 1412 can prompt a user for confirmation of identified tags, for example for a subset of identified tags for which the tag extraction model 1412 is uncertain (e.g., for which the probability score is within a range between a lower threshold and an upper threshold), e.g., via a graphical user interface communicable with the building controller programming system 1402.

As shown in FIG. 14, the tag extraction model 1412 provides the identified tags as outputs of the tag extraction model 1412 to a node selector 1414 of the building controller programming system 1402. The node selector 1414 uses the tags as inputs and determines nodes of a decision tree (shown as a system selection tree) based on the tags. For example, the tags may indicate general keywords (e.g., "temperature," "heating," "damper," "fan") whereas the nodes may provide particular selections on a decision tree, such that the node selector 1414 is configured to determine, based on the tags, which nodes should be selected in a decision tree, for example using a nodal analysis approach.

In some embodiments, the node selector 1414 calculates a score for each possible node based on the combination of tags received as inputs from the tag extraction model 1412. The scores can be calculated using objective functions associated with the different nodes which optimize a probability that the node should be selected. For example, each node may be given a score according to a formula such as $Node _ x score = {\sum }_{i = 1}^{1} {Tag}_{i} {C}_{i}$, where *Node_x score* is the score for an *x^{th}* node and *Tagᵢ* is a binary decision variable indication whether an *i^{th}* tag was identified by the tag extraction model 1412 (e.g., 1 for yes, 0 for no) (or indicating a probability score determined for the *i^{th}* tag by the tag extraction model 1412) and *Cᵢ* is a scaling constant that can be fit in training of the node selector 1414 based on a set of data associating tags with nodes. In such an embodiments, a node score can be calculated for each node and the nodes selected based on the node score (e.g., selected if the node score exceeds a threshold, selected if a node score is the highest among decisions to be made at an intersection of a decision tree, etc.). Various rules, constraints, etc. can also be implemented by the node selector 1414 to ensure selections reflect physical possibilities or constraints (e.g., node selections represent viable paths through a decision tree, represent actual equipment that exists and viable building operations, etc.). Various functions of the identified tags for identifying the relevant nodes can be implemented by the node selector 1414 in various embodiments.

In some embodiments, the node selector 1414 uses a neural network model or other machine learning model for mapping tags to nodes. The node selector 1414 can be trained on training data that includes known nodes on the system selection tree and corresponding sensors, actuators, and modules (SAM) data for existing buildings, historical building plans, or other validated data set (e.g., human-validated to corresponding to physical reality of a properly-configured building system). In some embodiments, SAM data describing the sensors, actuators, and modules data can be pre-preprocessed via a mapping of SAM data to tags to generate a training data set that includes tags paired with nodes of the system selection tree. Such associations can then be provided as training data to train, via machine learning, the node selector 1414 to generate a set of nodes corresponding to the extracted tags received from the tag extraction model 1412.

As illustrated in FIG. 14, the node selector 1414 provides selected nodes to a system selection tree 1416. The system selection tree 1416 is a decision tree that guides selection, via numerous possible branches and nodes, a system selection indicating, in a structured format, details of a control application to be built and provided by the building controller programming system 1402. The nodes provided by the node selector 1414 can define one or more paths through the system selection tree 1416 such that end points of the system selection tree 1416 are reached, i.e., such that system selection tree 1416 reaches a system selection. The system selection tree 1416 can include the numerous possible variations, combinations, versions, types, configurations, control logic, and other features relating to building equipment and systems which dictate the appropriate control application to be provided to support such features. The system selection tree 1416 is thereby configured to output a system selection based on the nodes selected by the node selector 1414.

In some embodiments, the system selection tree 1416 prompts a user for confirmation of a system selection made thereby and/or for selection of one or more nodes for a decision which a corresponding node was omitted from the nodes selected by the node selector 1414, such that user input is guided to any remaining decisions after application of the nodes from the node selector 1414 to the system selection tree 1416. A collaborative human-system interaction can thereby be provided to efficiently reach a system selection via the system selection tree.

As illustrated in FIG. 14, a selection is provided from the system selection tree to an application builder 1418 of the building controller programming system 1402.

In some embodiments, the selections available in the system selection tree 1416 are associated with different controller code modules stored in controller code module storage 1420 (memory device, database, etc.) of the building controller programming system 1402, such that the application builder 1418 can obtain controller code modules from the controller code module storage 1420 based on the selection received from the system selection tree 1416. The application builder 1418 can then assemble the controller code modules into a control application. A control application can thereby be built by the application builder 1418 by combining control code modules which are pre-programmed and stored in controller code module storage 1420. Advantageously, such code modules can be validated, tested, licensed, or otherwise approved for use in building equipment (e.g., for compliance with industry standards, building codes, etc.), such that control algorithms assembled from such controller code can be expected to perform reliably.

In some embodiments, the application builder 1418 may be provided with an indication that certain functionality indicated in the sequence of operations input 1404 and/or the plant drawing 1406 is not achievable using controller code already stored in the controller code module storage 1420. Such an indication can be a decision via the system selection tree 1416 (e.g., selection of one or more nodes leading to a decision that new controller code is needed) and/or otherwise output from the tag extraction model 1412 or node selector 1414. In such embodiments, the application builder 1418 can include at least one generative artificial intelligence algorithm configured to generate controller code executable to provide the functionality indicated as not achievable using pre-stored controller code. In this regard, generative artificial intelligence can be used to fill any gaps, omissions, etc. in the coverage of the controller code module storage 1420 for addressing the possible control applications that may be desired. In such embodiments, the application builder 1418 can thus create a control application as a combination of pre-programmed controller code modules stored by the building controller programming system 1402 and artificially generated controller code modules generated by the application builder 1418.

A control application complying with the functionality described in the sequence of operations input 1404 and/or the details of the plant drawing 1406 is thereby provided by the building controller programming system 1402. In some embodiments, a depiction of the control application is presented to a user via a graphical user interface for confirmation and/or modification before the control application is output from the building controller programming system 1402.

As illustrated in FIG. 14, the control application is provided from the building controller programming system 1402 to the controller 1408 of the system 1400. The controller 1408 includes computing hardware configured to store and execute the control application received from the building controller programming system 1402 (e.g., via a communications network, via a wired communications connection, etc.). In particular, the building controller programming system 1402 causes the control application to be installed on the controller 1408 such that the controller 1408 is configured to execute the control application online to generate control signals for the building equipment 1410. As such, FIG. 14 illustrates that the controller 1408 provides, by executing the control application, control signals to the building equipment 1410, thereby causing the building equipment to operate in accordance with the control application and with the desired behavior described in the sequence of operations input 1404 and/or plant drawing 1406.

By achieving such behavior of the building equipment 1410 using an automated process as described above, the building equipment 1410 can be caused to operate ideally while avoiding human error in control application selection and deployment, and while reducing computer-user interactions required to program controllers. The operations of the system 1400 described above can be executed for numerous sequences of operation, plant drawings, controllers, and building equipment, with scalability of the system 1400 illustrating further advantages in terms of quickly and efficiently bringing controllers and building equipment online to operate as intended to provide efficient heating, cooling, ventilation, and/or other tangible effects on buildings in an effective and efficient manner.

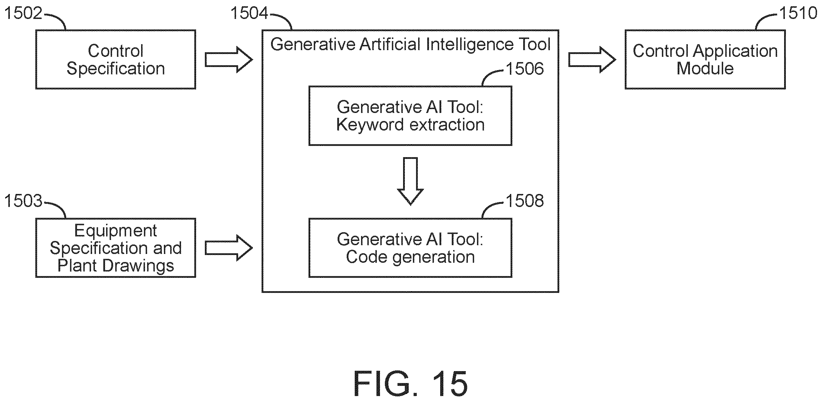

Referring now to FIG. 15, a block diagram of a method 1500 is shown, according to some embodiments. The method 1500 can be executed by the system 1400, system 100, system 200, or via any other system or method disclosed herein. For example, the method 1500 can be provided as instructions and data stored on one or more non-transitory computer readable media such that when the instructions are executed by one or more processors, the one or more processors perform the method 1500.

As illustrated in FIG. 15, the method 1500 includes a control specification 1502 being provided as an input to a generative artificial intelligence tool 1504. As shown in FIG. 15, equipment specification and plant drawings 1503 can also be provided as inputs to the generative artificial intelligence tool 1504 in some embodiments. The generative artificial intelligence (AI) tool 1504 can be implemented using the model 116 as described above and/or provided via the various artificial intelligence modeling, training, and execution features described above. As illustrated in FIG. 15, the method 1500 includes performing, by the generative AI tool 1504, a keyword extraction 1506 based on the control specification 1502 and/or the equipment specification and plant drawings 1503. The keyword extraction 1506 may be implemented as described for the tag extraction by the tag extraction model 1412 of FIG. 14, for example. The method 1500 then includes performing, by the generative AI tool, code generation 1508 based on the extracted keywords from the keyword extraction 1506. The code generation 1508 includes generating, based on the keyword extraction 1506, computer code that can be executed by a building controller and which provides functionality in accordance with the control specification 1502. The computer code generated by the generative AI tool via code generation 1508 can then be assembled and output as a control application module 1510 as part of the method 1500 as illustrated in FIG. 15. The control application module 1510 is then installed on a building controller and executed to control operation of building equipment.

In some embodiments, the generative AI tool 1504 includes at least one generative AI model according to the teachings above, trained and/or fine-tuned on controller applications and other related code in use by various controllers. For example, a library of control applications along with specification information describing the functionality of such applications and/or keywords associated with such applications can be provided as training data for use in training and/or fine-tuning the at least one generative AI model.

In some embodiments, the generative artificial intelligence tool 1504 is configured to provide one or more constraints, validation conditions, automated testing environments, simulations, etc. to validate, test, or otherwise confirm functionality of the generated code from code generation 1508 prior to deployment of the control application module 1510.

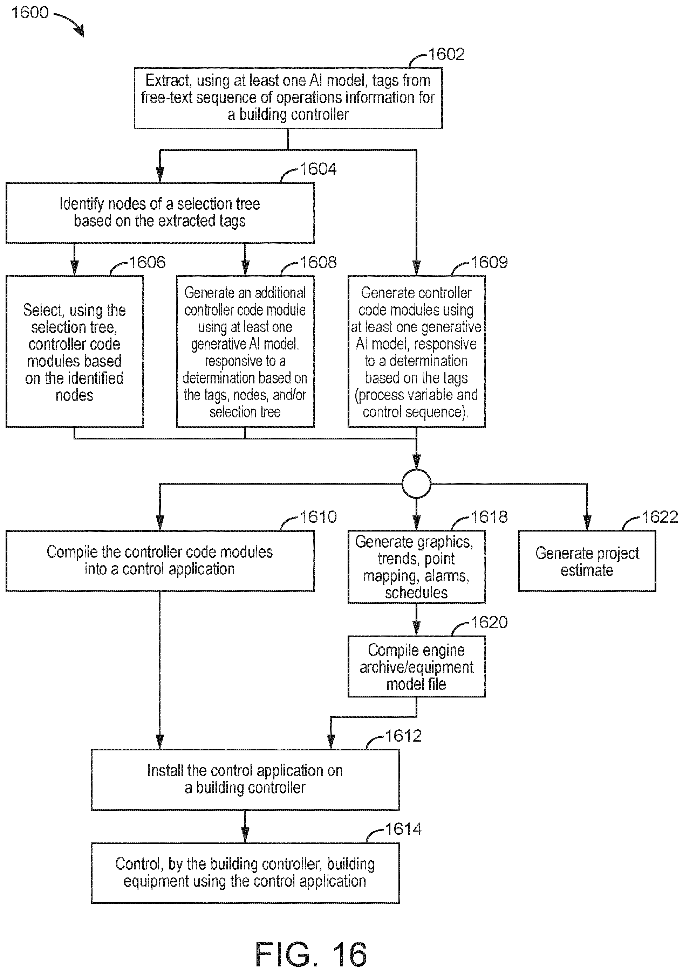

Referring now to FIG. 16, a flowchart of a method 1600 is shown, according to some embodiments. The method 1600 can be executed by the system 1400, in some embodiments. The method 1600 can be executed by one or more processors executing instructions stored on one or more non-transitory computer readable, for example via a cloud computing resource or other computing system.

At step 1602, tags from free-text sequence of operations information for a building controller are extracted using at least one AI model (e.g., as described with reference to the tag extraction model 1412 above). At step 1604, nodes of a selection tree are identified based on the extracted tags (e.g., as described with reference to the node selector 1414 and the system selection tree 1416 above). At step 1606, control code modules are selected using the selection tree based on the identified nodes (e.g., as described with reference to the node selector 1414, the system selection tree 1416, the application builder 1418, and the controller code module storage 1420 above). At step 1608, at least one additional controller code module is generated using at least one generative AI model responsive to a determination based on the tags, nodes, and/or selection tree. Step 1608 can be implemented using teachings of FIG. 15, for example, based on a determination that the tags, nodes, and/or selection tree indicate that the selected controller code modules are insufficient to provide functionality described in the sequence of operations information.

In some embodiments, the method 1600 proceeds directly from step 1602 to step 1609, where controller code modules are generated using at least one generative AI model responsive to a determination based on the tags, for example based on a process variable and control sequence indicated by the tags. For example, the at least one generative AI model may be trained to look-up (select), generate (e.g., write, develop) code modules using the tags as an input. In some embodiments, additional equipment specification and/or plant drawings information (beyond the sequence of operations information from step 1602) are used as inputs to the at least one generative AI model used in step 1609 and/or as inputs to other steps of method 1600.

Method 1600 proceeds from any of steps 1606, 1608, or 1609 (or a combination thereof) to step 1610, step 1618, and/or step 1622. At step 1610, the control modules (from step 1606 and 1608) are compiled into a control application. At step 1612, the control application is installed on building controller. At step 1614, building equipment is controlled by the building controller, for example such that the building equipment is caused to operate in accordance with the intended operations described in the sequence of operations information used as an input to step 1602.

At step 1618, in addition to or as an alternative to compiling controller code in step 1610, graphics, trends, point mappings, alarms, schedules, and/or other relationships, logic, or data structures for a building management system are generated in step 1618. Step 1618 can be performed using the controller code modules from at least one of steps 1606, 1608, and/or 1610 and/or using the extracted tags from step 1602. Step 1618 can be executed using one or more libraries (e.g., stored libraries of equipment graphics), generative AI models (e.g., AI models trained for automatically labeling points), or other rules or stored associations (e.g., rules indicating relevant alarms for certain equipment types, schedules for control routines indicated in the controller code modules, etc.). At step 1620, such information can be compiled as an equipment archive and/or equipment model file, and used together in steps 1612 and 1614 for control of building equipment by a building controller, for example in accordance with supervisory control decisions from a building management system operating using the various information generated in steps 1618 and 1620.

At step 1622, in addition to or as an alternative to compiling controller code in step 1610 and/or generating graphics, trends, point mappings, etc. in step 1618, a project estimate is generated. Step 1622 can include automatically generating the project estimate, for example by at least one generative AI model trained to provide project estimates in accordance with a template project estimate document based on controller code modules and/or extracted tags as generated in other steps of method 1600. In other embodiments, a rules-based algorithm can be provided as a program adapted to output a project estimate for acquiring and installing building equipment to implement the operations described in the sequence of operations information processed in step 1602.

Advantageously, by automatically generating controller code modules and associated tags as in method 1600 and using such data as inputs to project estimation generation in step 1622, various implementation details for building equipment and associated sensors and devices (e.g., particular sensors, equipment features, controller devices, etc.) needed to implement the sequence of operations can be automatically considered and factored into project estimation. Such a process can thereby result in more accurate and precise project estimations as compared to other project scoping approaches. For example, in some embodiments, method 1600 can proceed from step 1622 to steps 1612 and 1614, for example where a project is completed via equipment installation at a building in accordance with the generated project estimation in accordance with expectations so as to culminate in control, by the building controller, of building equipment using the control application generated in accordance with method 1600.

### VI. AUTOMATED SEQUENCE OF OPERATIONS OPTIMIZATION BASED ON FREE-FORM INPUT

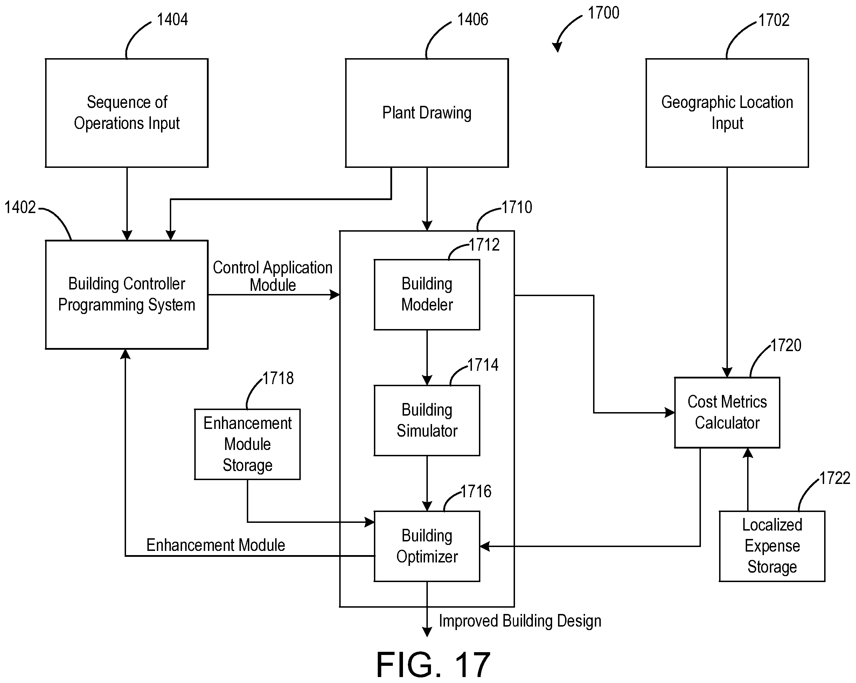

Referring now to FIGS. 17-19, systems and methods relating to generating an enhancement of the sequence of operations, installing modified control applications on building controllers based on the enhancement of the sequence of operations, and controlling equipment by executing the modified control applications are shown, according to various embodiments. The systems and methods of FIGS. 17-19 can be implemented using various combinations of the teachings above, in various embodiments such as those described in U.S. Patent Application Nos. 18/807,479 filed August 16, 2024 and 18/663,780 filed May 14, 2024, the disclosures of which are incorporated herein by reference in their entireties.

The features of FIGS. 17-19 relate to sequence of operations for building controllers installed with building equipment that operates to serve a building, for example to providing heating, ventilation, and/or cooling to a building. Building equipment can include heating, ventilation and/or cooling (HVAC) equipment such as air handling units, variable air volume boxes, chillers, boilers, heaters, room air conditioners, rooftop units, variable refrigerant flow systems, heat pumps, cooling towers, energy storage systems (e.g., batteries, thermal storage tanks, etc.), energy generation systems (e.g., natural gas generators, gasoline generators, photovoltaic systems, geothermal systems, etc.), etc., in various embodiments.

FIG. 17 shows a block diagram of a system 1700 for generating and installing an enhancement of a sequence of operations and for controlling a building operation by executing a control application modified based on the enhancement. The system 1700 can be implemented using various features above, for example by integrating or otherwise adapting system 100 and/or system 200 as described above. The system 1700 is shown as including a building controller programming system 1402 and a building operations optimization system 1710 which can be implemented as one or more non-transitory computer-readable media and one or more processors, where the one or more non-transitory computer-readable media store programming instructions that, when executed by the one or more processors, cause the one or more processors to perform the operations attributed to the building controller programming system 1402 or the building operations optimization system 1710 in the following description. The one or more non-transitory computer-readable media can also store other data, controller code modules, models, etc. used by the building controller programming system 1402 or the building operations optimization system 1710 as described herein. In some embodiments, the building controller programming system 1402 executes method 1600. In some embodiments, the building operations optimization system 1710 executes process 900 or the embodiments in FIGS. 9-12.

System 1700 is shown receiving a sequence of operations input 1404, a plant drawing 1406, and a geographic location input 1702. In some embodiments, the information contained in the sequence of operations input 1404, a plant drawing 1406, and a geographic location input 1702 are included in a collection of project documents. The building controller programming system 1402 is shown as receiving the sequence of operations input 1404 and the plant drawing 1406. The building controller programming system 1402 is further shown as outputting a control application module to the building operations optimization system 1710 (e.g., inputting the control application into a modeler and simulator). In some embodiments, the control application module includes control applications for a set or plurality of building controllers.

The sequence of operations input 1404 describes, in free-form text (natural language, unstructured, etc.) desired operations of a unit of equipment. For example, the sequence of operations input 1404 may describe a type of equipment to be provided and how the equipment should behave under various conditions. Sequence of operations input can be written by system designers, project managers, customers, or the like. Sequence of operations input can describe different building conditions (e.g., temperature, pressure, humidity, airflow, air quality), operations (e.g., on, off, setpoints, schedules, targets, etc.), data inputs (e.g., sensors, external data sources, etc.) as may be suitable to describe the relevant equipment and desired building system performance. Because sequence of operations input 1404 is free-form text, different sequence of operation inputs 1404 can describe either the same or different sequences of operation.

The plant drawing 1406 can include by a drawing (diagram, blue print, design document, etc.) of a plant (e.g., a central utility plant of a building or campus, system of airside building equipment, combination of waterside and airside equipment, other system serving a building). The drawing can indicate relationships between equipment and other equipment, relationships between equipment and building spaces, desired operations of equipment, etc. Various types of drawings can be encompassed by the plant drawing 1406 of system 1700 in various embodiments. The plant drawing 1406 can include information from a bill of materials, schedule, schematic, sequence of operations, or blueprint.

In some embodiments, the building controller programming system 1402 is structured as shown in FIG. 14, configured to process the sequence of operations input 1404 and/or the plant drawing 1406 and extract tags from such input data. The tags can be keywords, key terms, key concepts, etc. represented in the sequence of operations input 1404 and/or the plant drawing 1406. In some embodiments, the building controller programming system 1402 includes a natural language processing model configured to identify tags present in the natural language processing model. In other embodiments, the building controller programming system 1402 includes a generative artificial intelligence model configured to generate tags based on the sequence of operations input 1404 and/or the plant drawing 1406. In other embodiments, the building controller programming system 1402 uses the tags as inputs and determines nodes of a decision tree based on the tags. In some embodiments, the building controller programming system 1402 uses a neural network model or other machine learning model for mapping tags to nodes. The building controller programming system 1402 creates a control application module, including at least one control application, based on the tags or nodes, by combining pre-programmed and stored controller code modules, generating controller code modules with generative artificial intelligence, or a combination thereof.

As illustrated in FIG. 17, the building operations optimization system 1710 receives the control application module from the building controller programming system 1402. The building operations optimization system 1710 includes a building modeler 1712, a building simulator 1714, and a building optimizer 1716. The building operations optimization system 1710 includes computing hardware configured to generate models and run simulations based on the control application module and plant drawings 1406.

In particular, the building modeler 1712 of the building operations optimization system 1710 generates, using at least one generative AI model, a building equipment model that satisfies the characteristics and includes the identified pieces of building equipment described in the control application and the plant drawing 1406. The building modeler 1712 may provide the building equipment model according to a template for building equipment model such that the building equipment model is a suitable format, data structure, etc. for use further processing steps involving the building model. The AI model can generate data confirming to the template, consistent with teachings elsewhere herein. The building modeler 1712 may identify connections between the identified pieces of the building equipment, for example such that the building equipment model indicates resources which flow between certain pieces of equipment and/or other interrelationships between equipment of the building model. The building equipment model generated can be consistent with the plant models described and/or use in U.S. Patent Application No. 18/663,780, U.S. Patent Application No. 17/826,635, U.S. Patent No. 10,706,375 and/or U.S. Patent No. 11,238,547 and/or U.S. Application No. 17/733,786.

The building simulator 1714 runs, using at least one generative AI model, a simulation or a set of simulations based on the building equipment model and a control application module. The building simulator 1714 runs a simulation based on configurations of a query and using at least one AI model. The query can be a user input or an input determined by at least one AI model. A simulation is configured to provide simulation results which can provide a response to the user query. For instance, certain variations in building operations, certain external conditions (e.g., weather conditions), certain variations in plant equipment including in the central plant, etc. can be determined by the at least one AI model for exploring scenarios contemplated by the user's query. Configurations can include defining the duration of a simulation, the starting conditions for a simulation, weather or other conditions to occur during the simulations, changes in equipment settings or equipment availability in different simulations, and various other simulation parameters.

The building optimizer 1716 is configured to select an enhancement to the sequence of operations input 1404 based on a simulation result or a comparison of simulation results. In some embodiments, the building optimizer 1716 compares simulation results according to the teachings of U.S. Patent Application No. 17/826,635 and U.S. Patent Application No. 18/663,780. Some embodiments may include providing an analytical comparison of different simulations, for example comparing the costs, resource usage, equipment degradation, etc. resulting from different simulations. An enhancement includes a change to the operation of a building system, a building, a building equipment, or other apparatus described in the sequence of operations (e.g., decreasing water heat, cooling air in specific times of the day, etc.). In some embodiments, an enhancement includes a plurality of changes to a plurality of apparatuses. The determination of the enhancement includes indicating a desired outcome for the building operation (e.g., a reduction in usage of a particular resource, a reduction in costs, a net energy consumption target, a goal of meeting a budget for resource consumption, etc.) and determining an enhancement in furtherance of the desired outcome, and/or determining, as a result of the simulation, a metric by which the simulated plant performed poorly (e.g., as compared to benchmarks) and determining an enhancement associated with improvement of that metric or associated category. In some embodiments, the building optimizer 1716 determines an enhancement by selecting from a plurality of available enhancement modules stored in an enhancement module storage 1718 (memory device, database, etc.). In some embodiments, each enhancement module in the plurality of available enhancement modules is associated with a desired outcome or category of improvement. In some embodiments, the building optimizer 1716 is or includes a generative artificial intelligence model configured to generate an enhancement module based on the sequence of operations input 1404 and the desired outcome. The generative artificial intelligence model can be prompted to output a set of tags based on the content of the sequence of operations input 1404 and/or the plant drawing 1406. The generative artificial intelligence model can be fine-tuned based on training dataset of sequence of operations data, plant drawings, and manually identified enhancements such that the generative artificial intelligence model is adapted to identify enhancements particularly related to building operations. In some embodiments, the building optimizer 1716 provides the enhancement module to the building controller programming system 1402 to modify the control application module.

In some embodiments, after an initial simulation of the building model, the building operations optimization system 1710 is configured to provide an enhancement module to the building controller programming system 1402. The building controller programming system 1402 is configured to modify the control application module based on the enhancement module and provide the modified control application module to the building operations optimization system 1710 for additional modeling and simulation. The building controller programming system 1402 and the building operations optimization system 1710 are configured to execute a reiterative process of creating control application modules, modeling a building model, simulating a sequence of operations, and determining enhancement modules to achieve a desired outcome of the sequence of operations. Simulation results across iterations can be compared to determine enhancements that achieve results which are the most efficient (e.g., least energy usage, least resource usage, etc.), lowest emitting, most comfortable (e.g., least deviations from building setpoints), or some combination thereof (e.g., according to any objective function of one or more of such factors) of the simulated building configurations and sequences of operation.

Further describing, the building optimizer 1716 outputs an improved building design. The improved building design includes information relating to a building equipment model and the simulation. This information may include the sequence of operations input 1404, plant drawing 1406, building equipment lists, infrastructure schematics, simulation results (e.g., projected utility or resource use, equipment turnover time, etc.), or projected costs. In some embodiments, the building optimizer 1716 calculates the projected costs of managing and operating the building model. In such embodiment, the building optimizer 1716 executes arithmetic processes with the simulation results and cost metrics (e.g., equipment operation rate, building cooling system rate, equipment replacement cost, etc.) to calculate the projected costs. The cost metric calculator 1720 is configured to receive a geographic location input and calculate cost metrics based on expenses (e.g., electricity rates, labor costs, replacement part costs, etc.) that are localized to the geographic location. In some embodiments, the cost metric calculator 1720 receives the localized expenses from a localized expense storage 1722 that includes a database of expenses associated with a plurality of geographic locations. In some embodiments, the cost metrics calculator 1720 receives the localized expenses from sources external to the system 1700 (e.g., the Internet). In some embodiments, the cost metrics calculator 1720 receives the control application module and the building equipment model to further adjust the cost metrics based on the specification and operation of specific building equipment (e.g., equipment types, equipment brands, equipment modes, etc.). In some embodiments, the cost metrics calculator 1720 receives the control application module and the building equipment model from the building operations optimization system 1710.

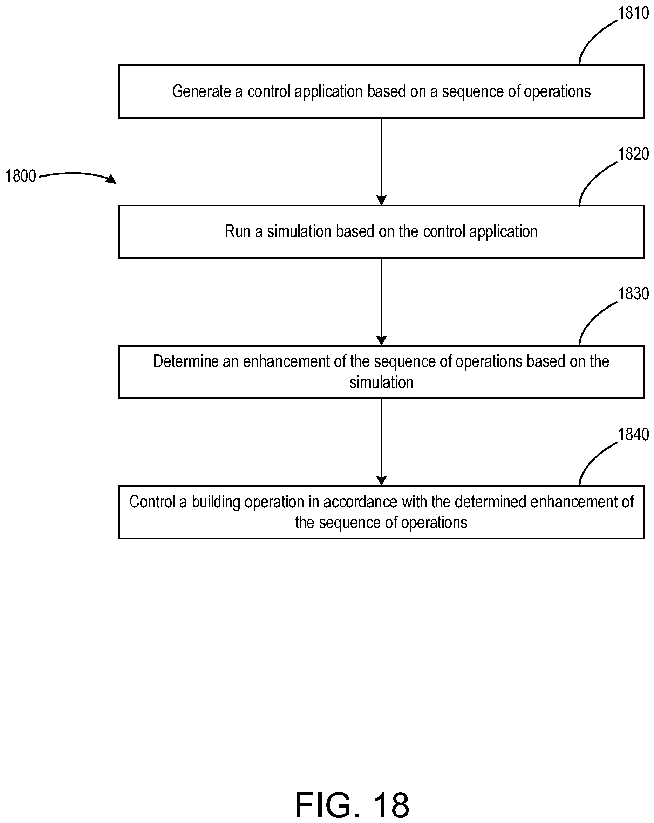

Referring now to FIG. 18, a flowchart of a method 1800 of generating, installing, and using an enhancement of a sequence of operations is shown, according to some embodiments. The method 1800 can be executed by the system 1700, system 100, system 200, or via any other system or method disclosed herein. For example, the method 1800 can be provided as instructions and data stored on one or more non-transitory computer readable media such that when the instructions are executed by one or more processors, the one or more processors perform the method 1800.

At step 1810, a control application is generated based on a sequence of operations, using at least one AI model. In some embodiments, the control application is generated additionally based on a plant drawing 1406. In some embodiments, the generation of the control application is executed by a building controller programming system 1402. In some embodiments, the generation of the control application includes extracting tags from a sequence of operations input 1404 and generating the control application based on associating the tags with nodes of a selection tree associated with selectable control logic. In some embodiments, the control application is included in a control application module. In some embodiments, the building controller programming system 1402 creates a control application based on the tags or nodes, by combining pre-programmed and stored controller code, generating controller code with generative artificial intelligence, or a combination thereof.

At step 1820, a simulation is run based on the control application, using at least one AI model. In some embodiments, the simulation is run by a building operations optimization system 1710. In some embodiments, running the simulation includes generating a model such as a building equipment model based on a plant drawing 1406 and a controller application such that the building equipment model satisfies the characteristics and includes the identified pieces of building equipment. In some embodiments, the simulation is run additionally based on a building model.

At step 1830, an enhancement of the sequence of operations is determined based on the simulation, for example using a result of the simulation. An enhancement includes a change to the operation of a building system, a building, a building equipment, or other apparatus described in the sequence of operations. In some embodiments, the determination of the enhancement includes indicating a desired outcome for the building operation and selecting an enhancement in furtherance of the desired outcome. In some embodiments, the determination is executed by a building operations optimization system 1710. In some embodiments, building operations optimization system 1710 selects from a plurality of available enhancement modules stored in an enhancement module storage 1718. In some embodiments, the building optimizer 1716 generates an enhancement based on the sequence of operations input 1404 and the desired outcome. In some embodiments, the enhancement is selected from a plurality of available enhancements stored in an enhancement module storage 1718. In some embodiments, the enhancement is included in an enhancement module. In some embodiments, the building controller programming system 1402 receives the enhancement and modifies the control application (e.g., adding, deleting, or other code-editing) based on the enhancement by combining pre-programmed and stored controller code, generating controller code with generative artificial intelligence, or a combination thereof.

For example, a simulation may exhibit inefficiencies in the cooling of a building, and a building controller programming system 1402 may determine an enhancement to "operate a room at a lower temperature" would increase cooling efficiency in the building. The building controller programming system 1402 edits the computer code in the control application to direct a building controller to lower a temperature setting in an AC chiller. Additionally, the building controller programming system 1402 may edit the control application to change the operation of secondary equipment, rooms, or other building apparatuses to execute an enhancement. For example, to execute "operate a room at a lower temperature," the building controller programming system 1402 may edit the control application to change the operation of dampers, variable air volume, or other HVAC components to redirect air into the room or provide extra air conditioning in the room. In some embodiments, adapting teachings of U.S. Patent No. 11,238,547, the building controller programming system 1402 may determine an enhancement that requires a change in building equipment. A determined enhancement may include changes in building equipment, control logic, building operation systems, or other features of the building system.

In another example, the building operations optimization system 1710 may calculate a baseline operation cost and use of an air handling unit by simulating the control applications from the initial sequence of operations input 1404 and plant drawing 1406. The building operations optimization system 1710 generates a list of combinations of enhancements. Each combination may include one or more enhancements (e.g., economizer changeover, minimize outdoor air flow, supply air setpoints, return fan control, supply fan control, heating coil addition, outdoor air damper addition, energy recovery system addition, etc.) that have been selected from the enhancement module storage 1718 or generated with AI. In some embodiments the enhancements can include equipment changes, for example addition of a heating coil, a minimum outdoor air damper, and/or energy recovery equipment. In the exemplary embodiment, the list includes all possible combinations of all available or generated enhancements. For each combination, the building controller programming system 1402 edits the control applications in accordance with the combination of enchantments. For each combination, the building operations optimization system 1710 calculates a set of operation costs and use by simulating the enhanced or edited control application. The building operations optimization system 1710 compares the results from all the combinations and the baseline operation cost and use. The building operations optimization system 1710 selects the combination of enhancements that achieves the desired result, such as cost-reducing or environmentally-friendly (e.g., least pollution, less energy consumption, etc.). The enhancement can include adding or changing a building device or equipment (e.g., adding a unit of equipment, changing one unit of equipment to a different model or type of equipment, adding a sensor, adding a controller device, etc.).

At step 1840, a building operation is controlled in accordance with the determined enhancement of the sequence of operations. In some embodiments, the building operation is controlled by a modified control application, executed by a building controller (e.g., and generated automatically based on the updated sequence of operations in accordance with teachings herein), such that the building equipment is caused to operate in accordance with the enhancement of the sequence of operations. In some embodiments, step 1840 additionally or alternatively includes adding or changing a building device or unit of equipment in accordance with the determined enhancement, for example physically installing a new component, sensor, device, equipment unit (and/or replacing an existing unit of equipment) at a building. Such new device or unit can then be controlled in accordance with a control application generated automatically using the teachings herein, in some embodiments.

In some embodiments, after step 1830, instead of executing step 1840, step 1820 is reelected and a second simulation is ran based on the modified control application. In such embodiment, the control application generated at step 1810 is a first control application and the simulation ran at the first execution of step 1820; and the modified control application generated at step 1830 is a second control application and the simulation ran at the second execution, or the execution, of step 1820 is a second simulation. In some embodiments, step 1820 is executed a plurality of times to run a plurality of simulations. In some embodiments, step 1830 is executed a plurality of times to determine a plurality of enhancements and a plurality of control applications. In some embodiments, step 1840 controls a building operation in accordance with a plurality of determined enhancements.

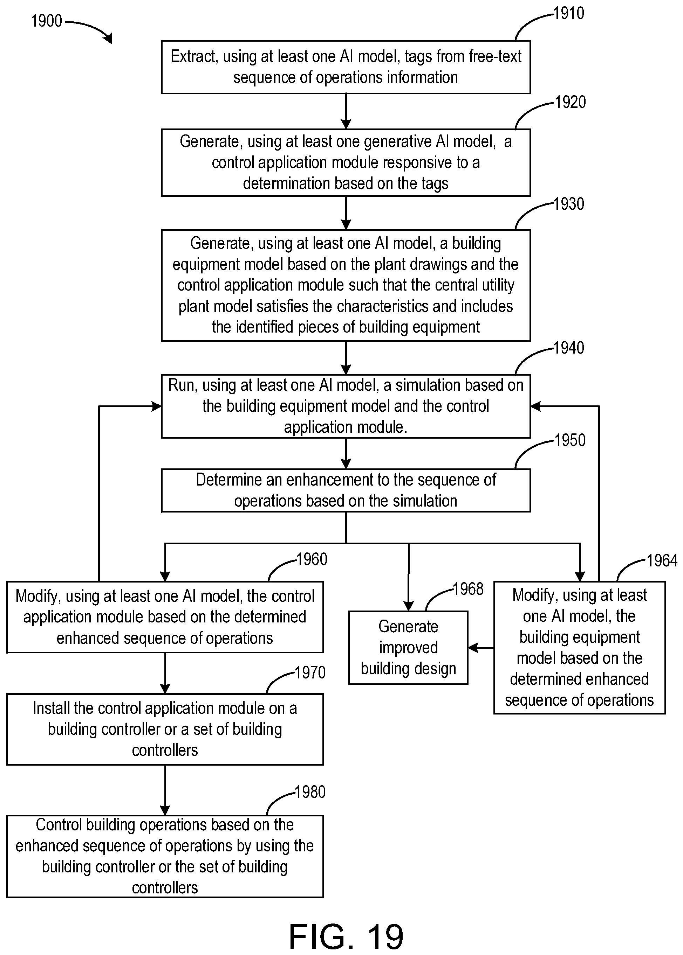

Referring now to FIG. 19, a flowchart of a method 1900 of automatically generating, installing, and using an enhancement of a sequence of operations. is shown, according to some embodiments. The method 1900 can be executed by the system 1700, in some embodiments. The method 1900 can be executed by one or more processors executing instructions stored on one or more non-transitory computer readable, for example via a cloud computing resource or other computing system.

At step 1910, tags from free-text sequence of operations information for a building controller are extracted using at least one AI model (e.g., as described with reference to the tag extraction model 1412 above). In some embodiments, nodes of a selection tree are identified based on the extracted tags (e.g., as described with reference to the node selector 1414 and the system selection tree 1416 above).

At step 1920, a control application module is generated in response to a determination based on the tags using at least one AI model. In some embodiments, the control application module is generated in response to a determination of nodes. In some embodiments, the control application module includes one or more control code modules. In some embodiments, control code modules are selected using the selection tree based on the identified nodes (e.g., as described with reference to the node selector 1414, the system selection tree 1416, the application builder 1418, and the controller code module storage 1420 above). In some embodiments, at least one controller code module is generated using at least one generative AI model responsive to a determination based on the tags, nodes, and/or selection tree. In some embodiments, the controller code modules are generated using at least one generative AI model responsive to a determination based on the tags, for example based on a process variable and control sequence indicated by the tags. For example, at least one generative AI model may be trained to look-up (select), generate (e.g., write, develop) code modules using the tags as an input. In some embodiments, additional equipment specification and/or plant drawings information (beyond the sequence of operations information from step 1910) are used as inputs to at least one generative AI model used in step 1910 and/or as inputs to other steps of method 1900.

At step 1930, a building equipment model based on the plant drawings and the control application module is generated, using at least one AI model, such that the building equipment model satisfies the characteristics and includes the identified pieces of building equipment (e.g., as described with reference to FIGS. 8-12 and the building modeler 1712).

At step 1940, a simulation is run, using at least one AI model, based on the building equipment model and the control application module equipment (e.g., as described with reference to FIGS. 8-12 and the building simulator 1714).

At step 1950, an enhancement to the sequence of operations is determined based on the simulation (e.g., as described with reference to FIGS. 8-12 and the building optimizer 1716). The determination of the enhancement includes indicating a desired outcome for the building operation and determining an enhancement in furtherance of the desired outcome. In some embodiments, the building optimizer 1716 determines an enhancement by selecting from a plurality of available enhancement modules stored in an enhancement module storage 1718. In some embodiments, each enhancement module in the plurality of available enhancement modules is associated with a desired outcome. In some embodiments, the building optimizer 1716 is or includes a generative artificial intelligence model configured to generate an enhancement module based on the sequence of operations input 1404 and the desired outcome. In some embodiments, the building optimizer 1716 provides the enhancement module to the building controller programming system 1402 to modify the control application module. The enhancement module is provided in a free-text, tag-based, node-based, or other format compatible with the building controller programming system 1402.

At step 1960, the control application module is modified, using at least one AI model, based on the determined enhanced sequence of operations (e.g., as described with reference to building controller programming system 1402). In some embodiments, tags from a free text enhancement module are extracted. In some embodiments, nodes of a selection tree are identified based on the extracted tags. In some embodiments, the control application module is modified in response to a determination of nodes. In some embodiments, the control application module is modified to include one or more control code modules. In some embodiments, control code modules are selected using the selection tree based on the identified nodes (e.g., as described with reference to the node selector 1414, the system selection tree 1416, the application builder 1418, and the controller code module storage 1420 above). In some embodiments, the control application is modified using at least one generative AI model responsive to a determination based on the tags, nodes, and/or selection tree. In some embodiments, at step 1964, the building equipment model is modified, using at least one AI model, based on the determined enhanced sequence of operations.

At step 1968, an improved building design is generated. The improved building design includes information relating to a building equipment model (or other equipment model and design) and the simulation. This information may include the sequence of operations input 1404, plant drawing 1406, building equipment lists, infrastructure schematics, simulation results (e.g., projected utility or resource use, equipment turnover time, etc.), or projected costs. In some embodiments, the building optimizer 1716 calculates the projected costs of managing and operating the building model. In such embodiment, the building optimizer 1716 executes arithmetic processes with the simulation results and cost metrics (e.g., equipment operation rate, building cooling system rate, equipment replacement cost, etc.) to calculate the projected costs. The cost metric calculator 1720 is configured to receive a geographic location input and calculate cost metrics based on expenses (e.g., electricity rates, labor costs, replacement part costs, etc.) localized to the geographic location. In some embodiments, the cost metric calculator 1720 receives the localized expenses from a localized expense storage 1722 that includes a database of expenses associated with a plurality of geographic locations. In some embodiments, the cost metric calculator receives the localized expenses from sources external to the system 1700 (e.g., the Internet). In some embodiments, the improved building design includes a modified building equipment model from step 1964.

In some embodiments, a project estimate is automatically generated, for example by at least one generative AI model trained to provide project estimates in accordance with a template project estimate document based on controller code modules and/or extracted tags as generated in other steps of method 1900. In other embodiments, a rules-based algorithm can be provided as a program adapted to output a project estimate for acquiring and installing building equipment to implement the operations described in the sequence of operations information processed in step 1910. Advantageously, by automatically generating controller code modules and associated tags as in method 1900 and using such data as inputs to project estimation generation in step 1968, various implementation details for building equipment and associated sensors and devices (e.g., particular sensors, equipment features, controller devices, etc.) needed to implement the sequence of operations can be automatically considered and factored into project estimation. Such a process can thereby result in more accurate and precise project estimations as compared to other project scoping approaches.

At step 1970, the control application module is installed on a building controller or a set of building controllers. At step 1980, building operations is controlled based on the enhanced sequence of operations by using the building controller or the set of building controllers. In some embodiments, the building operation is controlled by a modified control application, executed by a building controller, such that the building equipment is caused to operate in accordance with the enhancement of the sequence of operations.

In some embodiments, after step 1960, step 1940 is re-executed and a second simulation is ran based on the modified control application module. In some embodiments, a second enhancement is determined based on the second simulation. In some embodiments, a modified building equipment model is included in running a second simulation. In some embodiments, steps 1940-1960 are executed repeatedly before step 1970 is executed. In such embodiments, a plurality of control application modules is modified or generated, a plurality of simulations is ran, and a plurality of enhancements are determined. In some embodiments, a simulation of a plurality of simulations are included in the improved building design. In some embodiments, a plurality of building models is modified or generated. In some embodiments, step 1950 includes determining the enhancement based on a simulation from a plurality of simulations. In some embodiments, step 1970 include installing a control application module from a plurality of control application modules. In some embodiments, the control application module, from step 1930, without modification is installed on a building controller.

In some embodiments, method 1900 skips step 1940. In such embodiments, a simulation is not run and once the building equipment model is generated, step 1950 is executed. At step 1950, an enhancement to the sequence of operations is determined. In some embodiments, the enhancement is a user-determined free-text input of a change, addition, or modification to the sequence of operations. At step 1960, a control application module is modified, using at least one AI model, based on the determined enhancement. Modifying a control application module based on the enhancement includes a natural language processing model or a machine learning model (e.g., as described with reference to the building controller programming system 1402) to determine what control application module is modified, what controller code is used, and which building equipment or building system is installed with the modified control application module. In some embodiments, step 1960 additionally includes outputting the above determinations to a user. For example, in operation, a field technician or engineer may input an enhancement such as "decrease overall heat load in building sector A." A natural language processing model may interpret the free-text enhancement input and an AI model may determine the identity and location of the building controllers that need to be reprogrammed, the control application modules that need reprogramming, and how the controller code needs to be modified.

Equipment can be electronically controlled by controllers, e.g., computing hardware including memory, one or more processors, input ports, output ports, etc. that can be installed with such equipment to communicate with the equipment and with one or more sensors in a building. Controllers can execute control applications that provide building equipment with its desired operational behaviors, for example, to determine when a unit of building equipment should operate (e.g., on/off decisions), operating parameters for the building equipment (e.g., fan speeds, damper positions, valve positions, compressor frequency, setpoints, etc.), and other control decisions for the building equipment. However, the particular control application suitable for any given controller is particular to the model of equipment to be controlled, characteristics of the building space served by the equipment, availability of sensors and/or other data sources, occupant preferences or other goals for a space (e.g., target building conditions, compliance standards requiring particular indoor air conditions, etc.), etc. Constructing a control application can include converting a sequence of operations, a free-form text description, into a programming language that can be executed by a building controller. Furthermore, optimizing a sequence of operations involves determining a desired building operation, or an enhancement, and modifying the control application based on the enhancement.

In some embodiments, a multi-platform code is generated. In such embodiment, a standard description is converted from a source input such as a free-text input (e.g., sequence of operations input 1404), a control logic standard (e.g., ASHRAE 231P), a pre-programmed selection (e.g., a node or a tag), computer code (e.g., control application, controller code, etc.), or combination thereof. In some embodiments, a natural language processing model, a machine learning model, or an AI model converts, edits, or further processes the standard description. In some embodiments, a plurality of source inputs is converted and compiled into the standard description. In some embodiments, a step or multiple steps of method 1900 are executed with the standard description. For example, after step 1920, the control application module may be converted into a standard description. In such embodiments, when a source input is included such as in generating or modifying the control application module, the source input is converted. Before installing a control application module formatted into a standard description into a building controller, the standard description is converted into the computer code compatible with the building controller. In some embodiments, when a control application module is installed into a plurality of building controllers, the control application module is converted from a standard description into a plurality of computer codes respectively compatible with the plurality of building controllers.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied, and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions, and arrangement of the exemplary embodiments without departing from the scope of the present disclosure.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures show a specific order of method steps, the order of the steps may differ from what is depicted. Also, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps.

In various implementations, the steps and operations described herein may be performed on one processor or in a combination of two or more processors. For example, in some implementations, the various operations could be performed in a central server or set of central servers configured to receive data from one or more devices (e.g., edge computing devices/controllers) and perform the operations. In some implementations, the operations may be performed by one or more local controllers or computing devices (e.g., edge devices), such as controllers dedicated to and/or located within a particular building or portion of a building. In some implementations, the operations may be performed by a combination of one or more central or offsite computing devices/servers and one or more local controllers/computing devices. All such implementations are contemplated within the scope of the present disclosure. Further, unless otherwise indicated, when the present disclosure refers to one or more computer-readable storage media and/or one or more controllers, such computer-readable storage media and/or one or more controllers may be implemented as one or more central servers, one or more local controllers or computing devices (e.g., edge devices), any combination thereof, or any other combination of storage media and/or controllers regardless of the location of such devices.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims:

Embodiment 1. A method, comprising:
generating, by one or more processors, a control application from a sequence of operations for building equipment;
running, by one or more processors, a simulation based on the control application;
determining, by one or more processors, an enhancement to the sequence of operations based on the simulation; and
at least one of:
   controlling, via a building controller, the building equipment in accordance with the enhancement to the sequence of operations; or
   adding, to a building system, a building device or unit of building equipment in accordance with the enhancement to the sequence of operations.

Embodiment 2. The method of Embodiment 1, wherein generating the control application from the sequence of operations for the building equipment comprises:
automatically extracting tags from free-form text of the sequence of operations, and
generating the control application using the tags.

Embodiment 3. The method of Embodiment 1 or 2, wherein:
the method further comprises generating a model based on a plant drawing and the control application such that the model satisfies characteristics of the building equipment; and
running the simulation based on the control application is further based on the model.

Embodiment 4. The method of any of Embodiments 1 to 3, wherein generating the control application further comprises generating the control application from the sequence of operations for a building system, wherein the building system includes information about relationships between the building equipment, a building space, building operations, and equipment operations.

Embodiment 5. The method of any of Embodiments 1 to 4, wherein determining the enhancement to the sequence of operations based on the simulation comprises indicating an energy consumption target of the building equipment and selecting an enhancement module that corresponds to the energy consumption target.

Embodiment 6. The method of any of Embodiments 1 to 5, further comprising modifying the control application based on the enhancement to the sequence of operations.

Embodiment 7. The method of Embodiment 6, wherein:
the method further comprises installing the modified control application on the building controller; and
controlling the building equipment in accordance with the enhancement to the sequence of operations comprises executing the modified control application on the building controller in a manner causing the building equipment to operate in accordance with the enhancement.

Embodiment 8. The method of Embodiment 6 or 7, further comprising running a modified simulation based on the modified control application.

Embodiment 9. A system, comprising:
a computer system programmed to:
generate a control application from a sequence of operations for building equipment;
run a simulation based on the control application;
determine an enhancement to the sequence of operations based on the simulation; and
a building controller configured to control the building equipment in accordance with the enhancement to the sequence of operations.

Embodiment 10. The system of Embodiment 9, wherein the computer system is further programmed to:
extract tags from free-form text of the sequence of operations, and
generate the control application using the tags.

Embodiment 11. The system of Embodiment 9 or 10, wherein the computer system is further programmed to:
generate a model based on a plant drawing and the control application such that the model satisfies characteristics of the building equipment, and
run the simulation further based on the model.

Embodiment 12. The system of any of Embodiments 9 to 11, wherein the computer system is further programmed to generate the control application from the sequence of operations for a building system, wherein the building system includes information about relationships between the building equipment, a building space, building operations, and equipment operations.

Embodiment 13. The system of any of Embodiments 9 to 12, where the computer system is further programmed to:
indicate an energy consumption target of the building equipment, and
select an enhancement module that corresponds to the energy consumption target.

Embodiment 14. The system of any of Embodiments 9 to 13, wherein the computer system is further programmed to modify the control application based on the enhancement to the sequence of operations.

Embodiment 15. The system of Embodiment 14, wherein:
the computer system is further programmed to generate executable control code for the building controller by translating the modified control application to a standardized control format and converting the modified control application from the standardized control format to the executable control code in a controller format associated with the building controller; and
the building controller is further configured to execute the modified control application on the building controller in a manner causing the building equipment to operate in accordance with the enhancement.

Embodiment 16. The system of Embodiment 14 or 15, wherein the computer system is further programmed to run a modified simulation based on the modified control application.

Embodiment 17. A system, comprising:
a computer system programmed to:
generate a first control application from a sequence of operations for building equipment;
run a first simulation based on the first control application;
determine a first enhancement to the sequence of operations based on the first simulation;
modify the first control application to generate a second control application based on the first enhancement to the sequence of operations;
run a second simulation based on the second control application; and
   output, based on a result of the second simulation, a recommended building design associated with the sequence of operations or the first enhancement to the sequence of operations.

Embodiment 18. The system of Embodiment 17, wherein the computer system is further programmed to:
determine a second enhancement to the sequence of operations based on the first simulation and the second simulation;
modify the first control application or the second control application to generate a third control application based on the first enhancement to the sequence of operations or the second enhancement to the sequence of operations; and
run a third simulation based on the third control application,
wherein the recommended building design is further based on comparing the result of the second simulation with the result of the third simulation.

Embodiment 19. The system of Embodiment 17 or 18, wherein the first enhancement is associated with reducing emissions and the result of the second simulation indicates an amount of emissions reduction.

Embodiment 20. The system of any of Embodiments 17 to 19, wherein the computer system is further programmed to install a control application module to a building controller, wherein the control application module includes the first control application or the second control application.

## Claims

1. A method, comprising:
generating, by one or more processors, a control application from a sequence of operations for building equipment;
running, by one or more processors, a simulation based on the control application;
determining, by one or more processors, an enhancement to the sequence of operations based on the simulation; and
at least one of:
controlling, via a building controller, the building equipment in accordance with the enhancement to the sequence of operations; or
adding, to a building system, a building device or unit of building equipment in accordance with the enhancement to the sequence of operations.

2. The method of Claim 1, wherein generating the control application from the sequence of operations for the building equipment comprises:
automatically extracting tags from free-form text of the sequence of operations, and
generating the control application using the tags.

3. The method of Claim 1 or 2, wherein:
the method further comprises generating a model based on a plant drawing and the control application such that the model satisfies characteristics of the building equipment; and
running the simulation based on the control application is further based on the model.

4. The method of any of Claims 1 to 3, wherein generating the control application further comprises generating the control application from the sequence of operations for a building system, wherein the building system includes information about relationships between the building equipment, a building space, building operations, and equipment operations.

5. The method of any of Claims 1 to 4, wherein determining the enhancement to the sequence of operations based on the simulation comprises indicating an energy consumption target of the building equipment and selecting an enhancement module that corresponds to the energy consumption target.

6. The method of any of Claims 1 to 5, further comprising modifying the control application based on the enhancement to the sequence of operations;
optionally, wherein:
the method further comprises installing the modified control application on the building controller; and
controlling the building equipment in accordance with the enhancement to the sequence of operations comprises executing the modified control application on the building controller in a manner causing the building equipment to operate in accordance with the enhancement; and/or
optionally, further comprising running a modified simulation based on the modified control application.

7. A system, comprising:
a computer system programmed to:
generate a control application from a sequence of operations for building equipment;
run a simulation based on the control application;
determine an enhancement to the sequence of operations based on the simulation; and
a building controller configured to control the building equipment in accordance with the enhancement to the sequence of operations.

8. The system of Claim 7, wherein the computer system is further programmed to:
extract tags from free-form text of the sequence of operations, and
generate the control application using the tags.

9. The system of Claim 7 or 8, wherein the computer system is further programmed to:
generate a model based on a plant drawing and the control application such that the model satisfies characteristics of the building equipment, and
run the simulation further based on the model.

10. The system of any of Claims 7 to 9, wherein the computer system is further programmed to generate the control application from the sequence of operations for a building system, wherein the building system includes information about relationships between the building equipment, a building space, building operations, and equipment operations.

11. The system of any of Claims 7 to 10, where the computer system is further programmed to:
indicate an energy consumption target of the building equipment, and
select an enhancement module that corresponds to the energy consumption target.

12. The system of any of Claims 7 to 11, wherein the computer system is further programmed to modify the control application based on the enhancement to the sequence of operations;
optionally, wherein:
the computer system is further programmed to generate executable control code for the building controller by translating the modified control application to a standardized control format and converting the modified control application from the standardized control format to the executable control code in a controller format associated with the building controller; and
the building controller is further configured to execute the modified control application on the building controller in a manner causing the building equipment to operate in accordance with the enhancement; and/or
optionally, wherein the computer system is further programmed to run a modified simulation based on the modified control application.

13. A system, comprising:
a computer system programmed to:
generate a first control application from a sequence of operations for building equipment;
run a first simulation based on the first control application;
determine a first enhancement to the sequence of operations based on the first simulation;
modify the first control application to generate a second control application based on the first enhancement to the sequence of operations;
run a second simulation based on the second control application; and
output, based on a result of the second simulation, a recommended building design associated with the sequence of operations or the first enhancement to the sequence of operations.

14. The system of Claim 13, wherein the computer system is further programmed to:
determine a second enhancement to the sequence of operations based on the first simulation and the second simulation;
modify the first control application or the second control application to generate a third control application based on the first enhancement to the sequence of operations or the second enhancement to the sequence of operations; and
run a third simulation based on the third control application,
wherein the recommended building design is further based on comparing the result of the second simulation with the result of the third simulation.

15. The system of Claim 13 or 14, wherein the first enhancement is associated with reducing emissions and the result of the second simulation indicates an amount of emissions reduction; and/or
wherein the computer system is further programmed to install a control application module to a building controller, wherein the control application module includes the first control application or the second control application.
